# EUROPEAN PATENT APPLICATION

(11) **EP 4 513 283 A1**
(43) Date of publication of application: **26.02.2025**
(21) Application number: 24195659.8
(22) Date of filing: 21.08.2024
(51) Int. Cl.: G05B 19/406, G05B 13/02

(54) **SYSTEMS AND METHODS FOR END-TO-END OPTIMIZATION OF PROCESS CONTROL OR MONITORING**

(30) Priority: 21.08.2023 US 202363520894 P; 27.02.2024 US 202463558346 P; 07.08.2024 US 202463680230 P
(71) Applicant: Gauss Labs Inc., Palo Alto, CA 94301 (US)
(72) Inventor: SHIN, Minsuk, Cupertino (US); JUNG, Minju, Los Altos (US); ZABROCKI, Simon, Seoul (KR); YIM, Dongkyun, Seoul (KR); SHAH, Mohak, Dublin (US); ADITYA, Abhimanyu, San Francisco (US); CHOE, Byoungwon Brendon, Seoul (KR)
(74) Representative: Carpmaels & Ransford LLP

(57) **Abstract**

Described are systems and methods for optimizing process control or monitoring of manufacturing processes in manufacturing environments. Systems and methods can generate predictions or recommendations for process variables, target properties, or root causes of anomalies. Systems can include data and machine learning layers that can include: a data collector configured to receive data from the client application layer; a dataset generator configured to enable a user to create customized datasets from the data; a model management module configured to enable the user to build, train and/or update machine learning models; and an inference module configured to use the machine learning models for generating predictions or recommendations. Machine learning models can include aggregated adaptive online models (AggAOM) for generating predictions with scarce or sparse data.

## Description

### BACKGROUND

Modern manufacturing processes, such as semiconductor manufacturing processes, is getting increasingly complicated due to the amount of data generated. Typical systems and methods may only generate sparse measurement data that are not enough to provide for optimizing process control and monitoring. Optimizing process control and monitoring can help to reduce the burden and cost of processing and analyzing larger data sets to improve manufacturing processes. Optimization of process control and monitoring may include use of systems and methods for virtual metrology (VM), image metrology (IM), and root cause analysis (RCA). VM and IM can help generate predictive measurements thereby expanding the data sample size for more precise statistical measurements in statistical process control (SPC) or advanced process control (APC). RCA can help to determine, predict, or causally-analyze anomalies. Untimely control or monitoring of anomalous manufacturing processes can result in more processing anomalies that generate alarms and suspend manufacturing processes until anomalies are corrected.

Optimization of process control and monitoring can arise due to complementary use of VM, IM, and RCA. Complementary use of VM, IM, and RCA can improve or support: reducing process variabilities, managing predictive maintenance reliably, monitoring equipment performance deterioration (e.g., data drifts or data shifts), associating anomalous processes to yield, increasing equipment availability, expanding equipment coverage, or improving input data quality for SPC or APC. Additionally, optimization of process control and monitoring can benefit from interactions with users, e.g., experts such as process engineers. User interactions can include, for example, overriding process defaults, incorporating user preferences into processes, incorporating decisions and insights into processes, or experimenting through user-defined setups.

Further, VM systems and methods can be useful for enhancing productivity, improving quality, and reducing maintenance costs in semiconductor manufacturing by replacing typical physical metrology. Many implementations of VM may rely on a predictive modeling approach that can leverage equipment sensor data to estimate useful process outcome variables. Despite advantages of VM implementations, VM's limited deployment in manufacturing is due to accuracy and scalability issues, while ML-based VM faces challenges like data drifts, shifts, sparsity, and inconsistent quality, particularly in semiconductor processes.

There is a need for better systems and methods to optimize process control and monitoring using VM, IM, and RCA and also to allow user interaction thereof. Further, there is a need for improved systems and methods that can utilize at least scarce or sparse data for optimizing process control and monitoring in high-volume manufacturing.

### SUMMARY

Disclosed herein are systems for optimizing process control or monitoring of manufacturing processes in manufacturing environments. Optimizing process control or monitoring can include systems or methods associated with virtual metrology (VM), image metrology (IM), or root cause analysis (RCA). Process control or monitoring may be performed with, e.g., statistical process control (SPC) or advanced process control (APC).

In an aspect, disclosed herein is a system for optimizing process control or monitoring of manufacturing environments, the system comprising: data and machine learning layers configured to interface with a client application layer associated with a manufacturing environment, wherein the data and machine learning layers comprise (1) a data collector configured to receive data from at least one source within the client application layer, (2) a dataset generator configured to enable a user to create one or more customized datasets from the data, (3) a model management module configured to enable the user to build, train and/or update one or more machine learning models using at least in part the one or more customized datasets, and (4) an inference module configured to use the one or more machine learning models for generating one or more predictions as one or more processes are being performed and/or equipment is being operated in the manufacturing environment; and a plurality of data stores configured to store at least the data, new data updates, the one or more customized datasets, and the one or more machine learning models. In some embodiments, the one or more predictions are generated based on virtual metrology (VM). In some embodiments, the wherein the one or more machine learning models comprise an aggregated adaptive online model (AggAOM). In some embodiments, the AggAOM is configured to utilize commonalities in the equipment and associated chambers or stations, wherein the commonalities include one or more of control system architectures, sensor types, process flows, or quality control procedures. In some embodiments, the AggAOM is configured to employ a hierarchical structure of the equipment and associated chambers or stations. In some embodiments, the hierarchical structure includes at least two levels of hierarchy. In some embodiments, the hierarchical structure includes (1) an equipment level that assigns a global model to each equipment, wherein the global model is configured to process commonalities for evaluating a first set of residuals that occur across various chambers or stations associated with each equipment, (2) a chamber level that generates a higher-resolution chamber model than the global model, wherein the chamber model is configured to process commonalities for evaluating a second set of residuals, and (3) a station level that includes a higher-resolution station-wise model than the chamber model, wherein the station-wise model is configure to process at least the first set and the second set of residuals for generating the one or more predictions. In some embodiments, the plurality of data stores comprise a database configured to store the data received from the at least one source within the client application layer. In some embodiments, the plurality of data stores comprise an object storage configured to store one or more model data files associated with the one or more machine learning models. In some embodiments, the system further comprises a publishing module that is configured to publish the one or more predictions for integration into process control workflows associated with the manufacturing environment. In some embodiments, the one or more predictions are useable to enable or optimize characterization, monitoring, control and/or modifications substantially in real-time to the one or more processes and/or the equipment in the manufacturing environment. In some embodiments, the system further comprises a model performance evaluation module that is configured to generate one or more performance metrics for the one or more machine learning models. In some embodiments, the one or more performance metrics are derived from at least sensitivity analysis or stress tests. In some embodiments, the system further comprising a front-end user management module comprising a graphical user interface (GUI) configured to display the one or more performance metrics on a dashboard. In some embodiments, the data comprises equipment data, process data, metadata and/or measurement data. In some embodiments, the data collector is configured to receive the data synchronously from at least two different sources. In some embodiments, the data collector is configured to receive the data from the at least one source based at least in part on a predetermined schedule. In some embodiments, the data collector is configured to receive the data from the at least one source, based at least in part on detection of one or more events occurring within the manufacturing environment. In some embodiments, the one or more events are associated with a drift, an excursion, a shift, a deviation, or an anomaly in at least one process or a process equipment within the manufacturing environment. In some embodiments, the data comprises a plurality of data types and datasets comprising of: (1) historical process data, (2) current process data, (3) historical measurement data of one or more metrics, (4) current measurement data of one or more metrics, (5) operation data, or (6) equipment specification metadata. In some embodiments, the dataset generator is configured to automate selection of one or more features within the one or more customized datasets. In some embodiments, the model management module is configured to train the one or more machine learning models, including hyperparameter optimization. In some embodiments, the hyperparameter optimization is performed based on one or more performance metrics when the one or more performance metrics degrades below a predetermined threshold. In some embodiments, the manufacturing environment is associated with at least one of semiconductor manufacturing, LCD display manufacturing, solar panel manufacturing, electronics manufacturing, battery manufacturing, automotive manufacturing, or pharmaceutical manufacturing.

In another aspect, disclosed herein is a computer program product for optimizing process control or monitoring of manufacturing environments, the computer program product comprising at least one non-transitory computer-readable medium having computer-readable program code portions embodied therein, the computer-readable program code portions comprising: an executable portion configured to interface with a client application layer associated with a manufacturing environment, wherein the executable portion comprises (1) an executable portion configured to receive data from at least one source within the client application layer, (2) an executable portion configured to enable a user to create one or more customized datasets from the data, (3) an executable portion configured to enable the user to build, train and/or update one or more machine learning models using at least in part the one or more customized datasets, and (4) an executable portion configured to use the one or more machine learning models for generating one or more predictions as one or more processes are being performed and/or equipment is being operated in the manufacturing environment.

Further, the present disclosure provides improved systems and methods that can utilize at least scarce or sparse data for optimizing process control and monitoring in high-volume manufacturing. For example, disclosed herein is an aggregated adaptive online model (AggAOM), which can effectively solve at least the technical challenges of data scarcity or sparsity in virtual metrology (VM). Data scarcity or sparsity can result from post-process measurements, e.g., thickness and mass, because of the limited physical measurement ratio (e.g., typically less than 5%). In some cases, data scarcity or sparsity can be determined as a number of training samples, which can be further determined by two factors, e.g., sampling rate and data collection duration. By leveraging the hierarchical structure of manufacturing equipment, the AggAOM can capture and utilize the underlying commonalities among equipment chambers within the same hierarchy in addition to their individual variations. Systems and methods herein can enable more efficient use of limited data (e.g., scarce or sparse data) and can substantially improve the prediction accuracy of VM employed in high-volume manufacturing facilities, e.g., mega-fabs or semiconductor fabs, in a statistically significant way. Improvements herein were demonstrated by utilizing datasets generated from SK hynix^{®} over a period of time (e.g., nine months) and demonstrating that AggAOM outperforms other models significantly in accuracy and usefulness. Accordingly, systems and methods herein can provide an improved technical solution for optimizing VM for high-volume manufacturing such as semiconductor manufacturing.

Additional aspects and advantages of the present disclosure will become readily apparent from the following detailed description, wherein only illustrative embodiments of the present disclosure are shown and described. As will be realized, the present disclosure is capable of other and different embodiments, and its several details are capable of modifications in various obvious respects, all without departing from the present disclosure. Accordingly, the drawings and description are to be regarded as illustrative in nature and not as restrictive.

### INCORPORATION BY REFERENCE

All publications, patents, and patent applications mentioned in this specification are herein incorporated by reference to the same extent as if each individual publication, patent, or patent application was specifically and individually indicated to be incorporated by reference. To the extent publications and patents or patent applications incorporated by reference contradict the present disclosure contained in the specification, the specification is intended to supersede and/or take precedence over any such contradictory material.

### BRIEF DESCRIPTION OF THE DRAWINGS

The novel features of the present disclosure are set forth with particularity in the appended claims. A better understanding of the features and advantages of the present disclosure will be obtained by reference to the following detailed description that sets forth illustrative embodiments, in which the principles of the present disclosure are utilized, and the accompanying drawings of which:
**FIGs. 1A-1C** illustrate non-limiting examples for optimizing process control or monitoring of manufacturing processes in manufacturing environments including (i) high-level relationships between virtual metrology (VM), image metrology (IM), and root cause analysis (RCA) in **FIG. 1A****;** (ii) system architectures for VM in **FIG. 1B****;** and (iii) high-level system workflows for VM in **FIG. 1C****,** in accordance with some embodiments;
**FIGs. 2A-2B** illustrate non-limiting examples of manufacturing processes that can utilize virtual metrology (VM), image metrology (IM), or root cause analysis (RCA), in accordance with some embodiments. **FIG. 2A** illustrates example manufacturing processes. **FIG. 2B** illustrates example metrology;

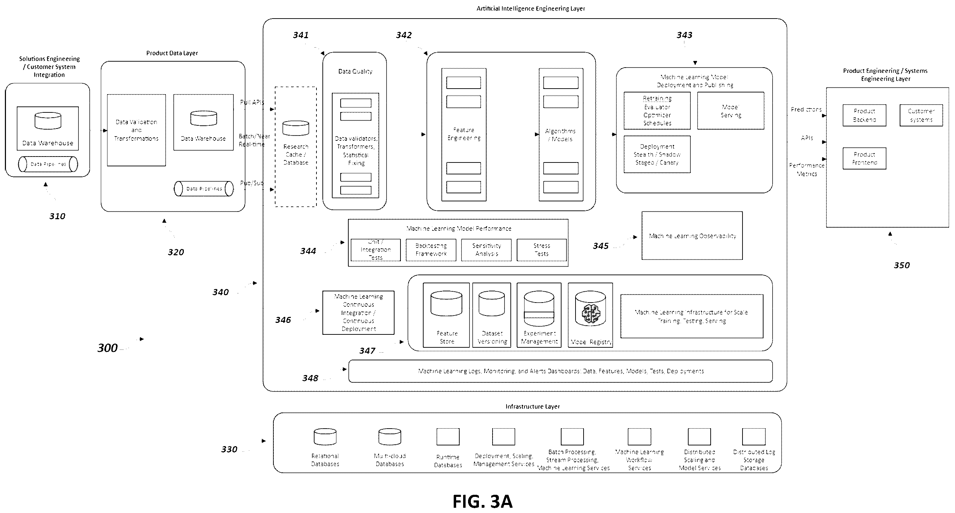

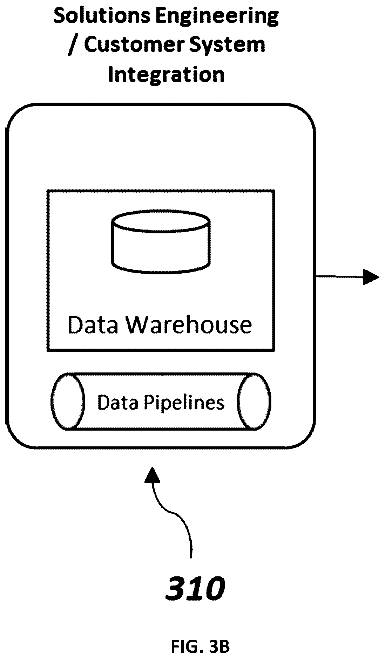

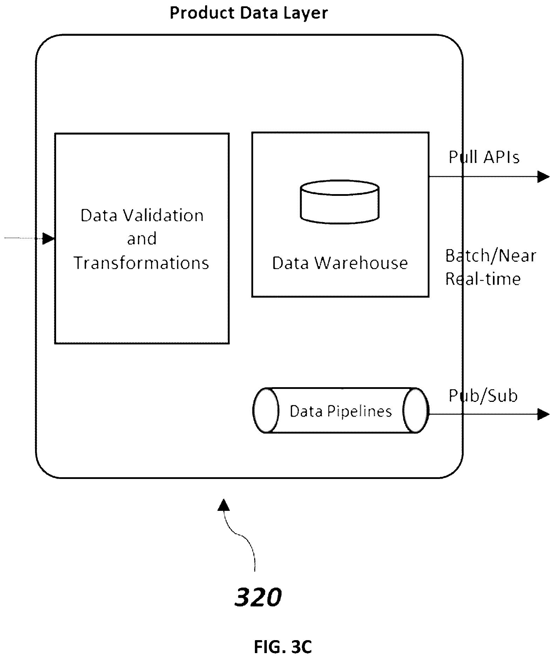

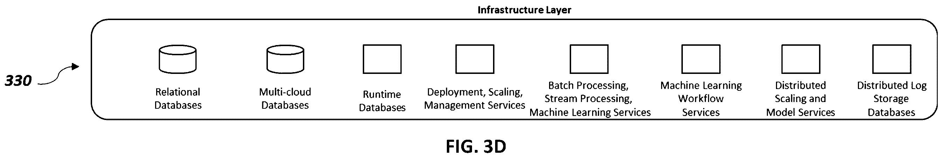

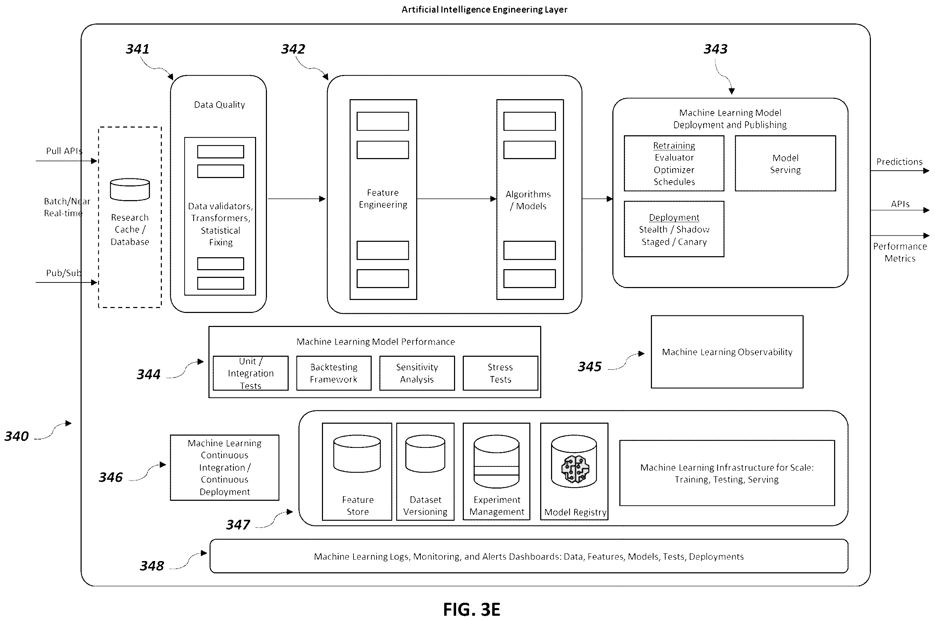

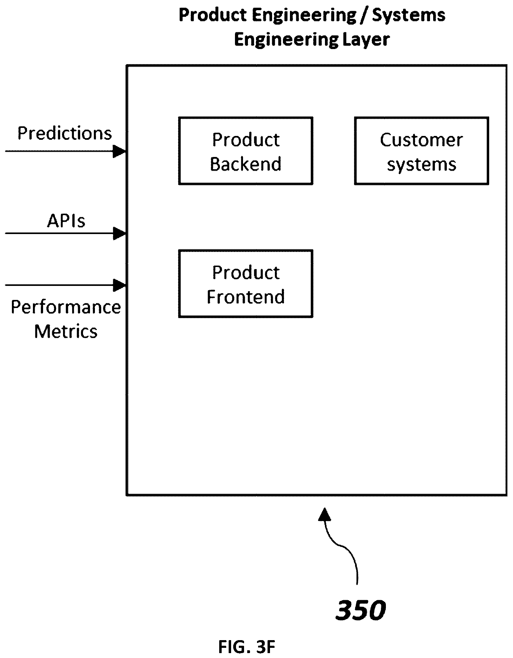

**FIGs. 3A-3F** illustrate non-limiting examples of high-level artificial intelligence (AI) workflows for optimizing process control or monitoring of manufacturing processes in manufacturing environments, in accordance with some embodiments. **FIG. 3A** illustrates an example high-level architecture or workflow. **FIG. 3B** illustrates an example data interface for solutions engineering or customer system integration. **FIG. 3C** illustrates an example product data layer for receiving data or fetching data from data interface. **FIG. 3D** illustrates an example infrastructure module or layer for facilitating predictions or recommendations. **FIG. 3E** illustrates example AI layers for developing or deploying machine learning (ML) models or inference models. **FIG. 3F** illustrates example product engineering layers for providing predictions, recommendations, performance metrics, and the like;
**FIG. 4** illustrates non-limiting examples of AI workflows for optimizing process control or monitoring of manufacturing processes in manufacturing environments, in accordance with some embodiments;
**FIG. 5** illustrates non-limiting examples of feature engineering for optimizing process control or monitoring of manufacturing processes in manufacturing environments, in accordance with some embodiments;

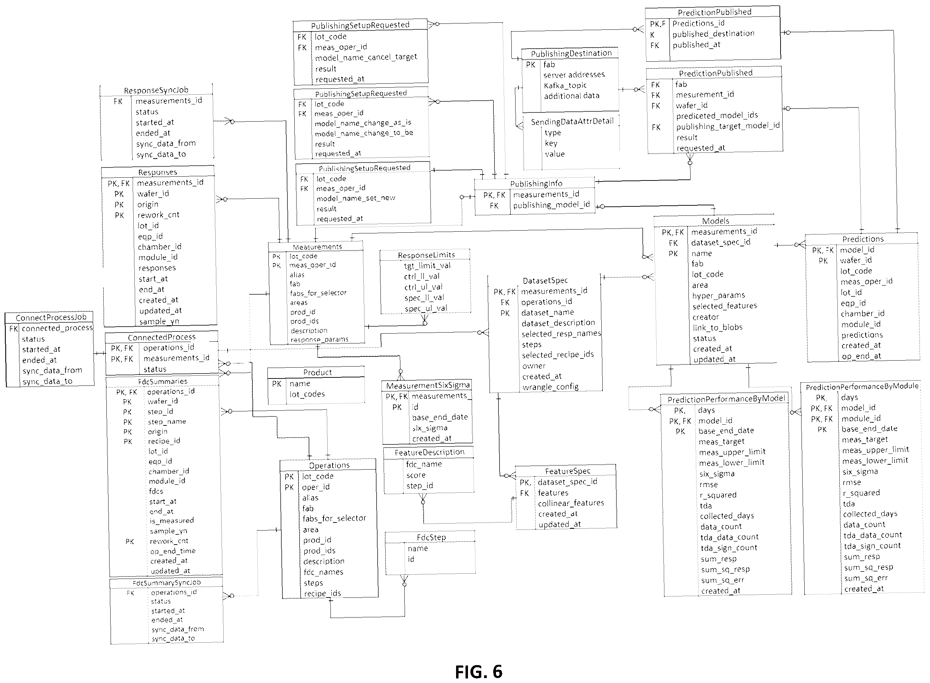

**FIG. 6** illustrates non-limiting examples of data for optimizing process control or monitoring of manufacturing processes in manufacturing environments, of the present disclosure;
**FIG. 7** illustrates a high-level architecture or flow of an adaptive online model (AOM), in accordance with some embodiments;
**FIGs. 8A-8B** illustrate examples of how different models may utilize equipment, chambers, and stations, in accordance with some embodiments. **FIG. 8A** illustrates an example of equipment, chambers, and stations used by a single model. **FIG. 8B** illustrates an example of equipment, chambers, and stations used by a station-wise model;
**FIG. 9** illustrates an example of how the aggregated adaptive online model (AggAOM) herein may utilize equipment, chambers, and stations, in accordance with some embodiments;
**FIG. 10** illustrates an example of standardized wafer thicknesses for three equipment in a semiconductor manufacturing process, in accordance with some embodiments;
**FIG. 11** illustrates an example high-level architecture or flow of the aggregated adaptive online model (AggAOM) herein, in accordance with some embodiments;

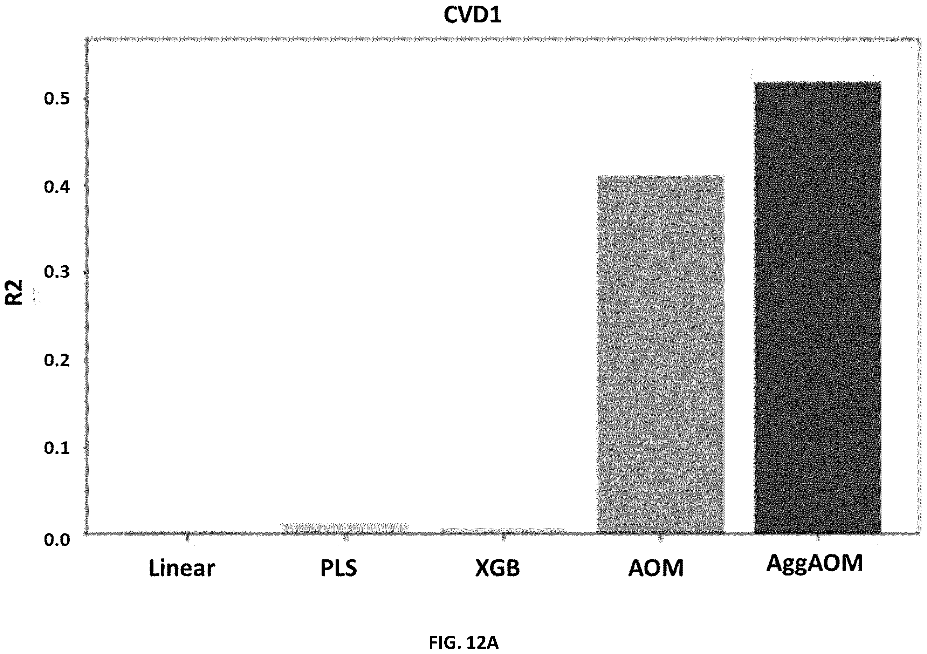

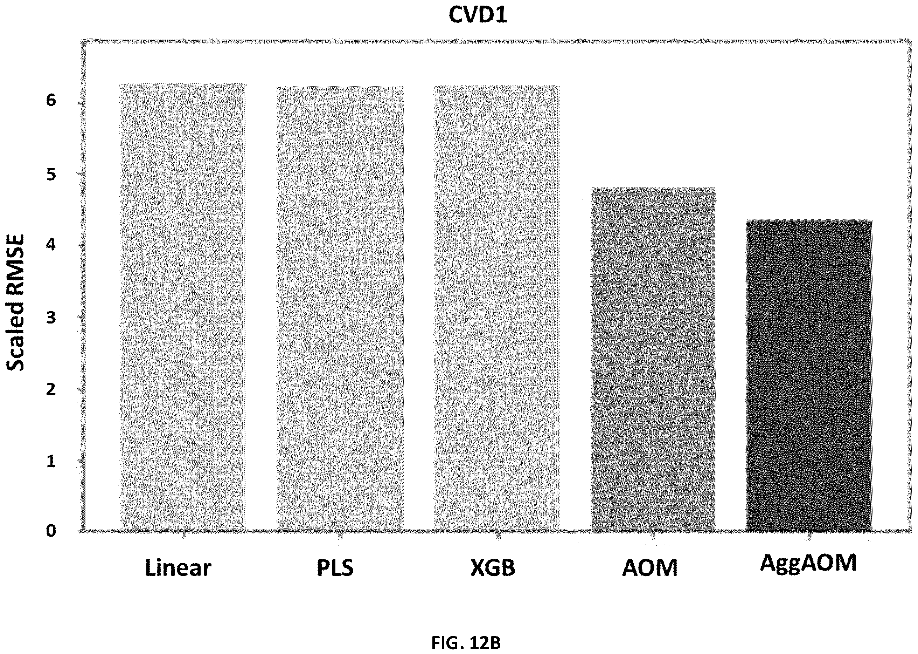

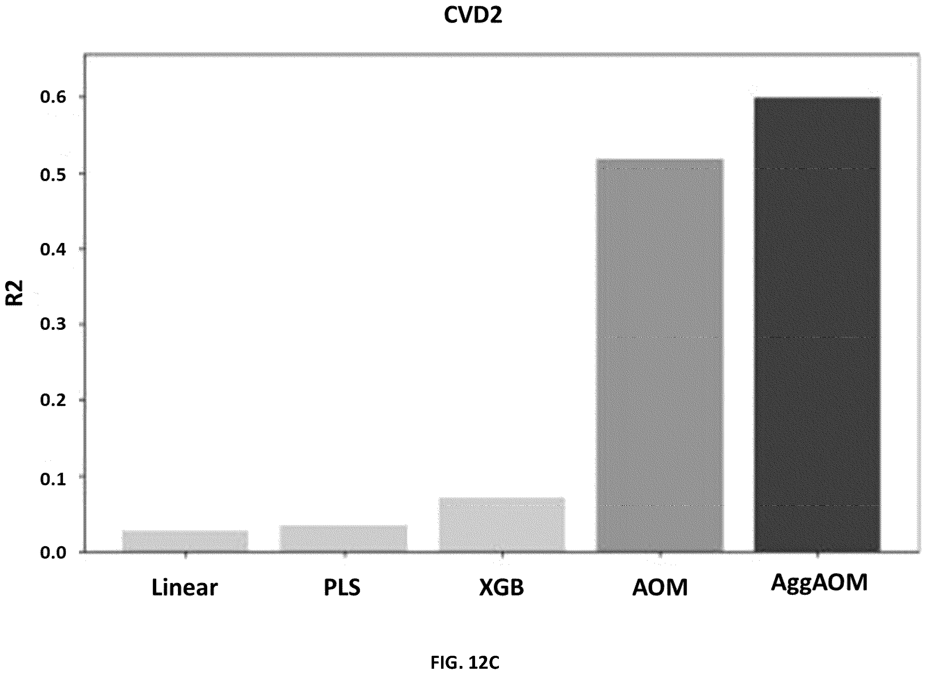

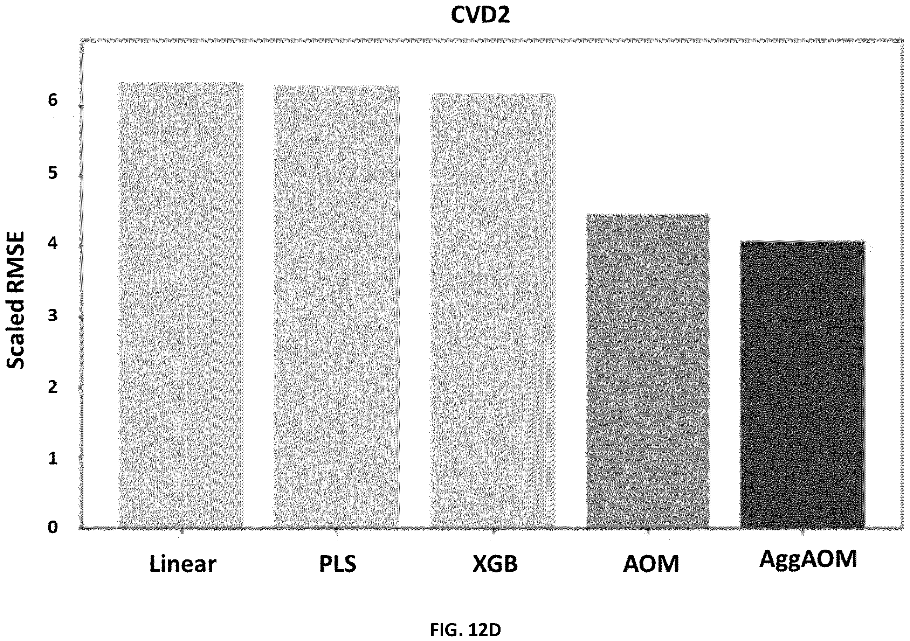

**FIGs. 12A-12D** illustrate comparison of performance between different models, e.g., linear model, partial least squares (PLS) model, XGBoost (XGB) model, adaptive online model (AOM), and the aggregated adaptive online model (AggAOM) herein, in accordance with some embodiments. **FIG. 12A** compares performance, e.g., r-squared (R2), with a first chemical vapor deposition (CVD1) dataset. **FIG. 12B** compares performance, e.g., root mean squared error (RMSE), with a first chemical vapor deposition (CVD1) dataset. **FIG. 12C** compares performance, e.g., R2, with a second chemical vapor deposition (CVD2) dataset. **FIG. 12D** compares performance, e.g., RMSE, with a second chemical vapor deposition (CVD1) dataset; and
**FIG. 13** illustrates a non-limiting example of a computing system, in accordance with some embodiments.

### DETAILED DESCRIPTION

While various embodiments of the present disclosure have been shown and described herein, such embodiments are provided by way of example only. Numerous variations, changes, or substitutions may occur without departing from the present disclosure. It should be understood that various alternatives to the embodiments of the present disclosure described herein may be employed.

Typical systems for optimizing process control or monitoring in manufacturing processes are deficient. Systems described herein can include connected systems associated with virtual metrology (VM), image metrology (IM), or root cause analysis (RCA) for optimizing process control or monitoring in manufacturing processes.

In VM or IM, measurement data for an individual process or across multiple processes or different process areas can be important for process monitoring quality. Manufacturing processes can include semiconductor manufacturing processes for, e.g., memory and logic devices. Monitoring quality of transformations occurring at the end of each process step can be extremely expensive or even prohibitive in terms of time, cost, and technology. Consequently, manufacturing processes typically rely on very limited data, e.g., number of sample measurements. Sampling size is further limited in the case of destructive sampling scenarios where the product that yields the sample is destroyed or rendered unusable in the process. Limited sampling due to the above issues results in sub-optimal process control or monitoring at various levels. Virtual metrology provides an ability to effectively predict measurements of products thereby complementing physical sampling of products while avoiding the associated costs. Image metrology optimizes conventional metrology by generating more measurement information on the same image. The ability to sample the entire product space after each process step can allow for highly rigorous process control or monitoring optimization resulting in variability reduction, yield optimization, reduction in lost revenue due to scrap (e.g., inoperable products), equipment down-time, and measurement costs.

In RCA, typical systems may not be able to model data drifts, data shifts, or hierarchical data structures observed in manufacturing processes such as semiconductor manufacturing processes. Data drifts may generally refer to gradual changes of process dynamics due to, for example, aging of equipment used in manufacturing processes. Data shifts may generally refer to abrupt changes of process dynamics due to, for example, external operations such as maintenance or calibration. Advanced process control (APC) methods or statistical process control (SPC) methods associated with VM or IM may need accurate predictions of process variables or target properties in manufacturing processes. However, some systems may not be able to model non-stationarities observed in real or actual data, e.g., contemporary or historical sensor data. Non-stationarities can be generated in, for example, semiconductor manufacturing processes such as chemical vapor deposition (CVD), etching, diffusion, or other processes. For example, data drifts can cause steady or slow decreases in the accuracy of predictions associated with VM or IM models. Data shifts can cause abrupt failures of VM or IM models. Some VM or IM systems using moving window-based methods can be inaccurate due to, for example, selecting small subsets of data. Some VM or IM systems using just-in-time learning methods cannot adapt to changes in the underlying relationships between process variables or target properties.

Features of systems described herein can include, e.g., domain support features, machine learning (ML) features, and product features. Domain support features can include features associated with allowing users (e.g., experts such as process engineers) to incorporate domain knowledge into processes. Incorporating domain knowledge can include creating custom process experiments; generating custom logic (e.g., custom process recipes); comparing or assessing user performance with ML models for VM, RCA, and IM; including domain-informed features and datasets into process experiments; or defining domain-informed performance and evaluation metrics. Machine learning features can include features associated with building both automated and custom VM, RCA, and IM models; benchmarking and evaluating a wide variety of models; provisioning model performance and domain-specific information for either automated metrology or interactive metrology; experiment buildup for custom ML models; in-product model building; refining and tuning in response to changing operational conditions (e.g., adapting to data drifts and shifts); automating scheduling for model re-training; or supporting user data privacy by supporting ML model training and inference processes in the deployed product environment per user needs. Product features can include features associated with supporting different data and computing infrastructures (e.g., on-site services, cloud services, custom services, or combinations thereof); or modularizing product features to enable uses across and beyond supported use-cases (e.g., VM outputs to monitor equipment health).

### Systems for optimizing process control or monitoring

### Overview of systems

In an aspect, disclosed herein are systems for optimizing process control or monitoring of manufacturing processes in manufacturing environments. Systems can comprise: data and machine learning layers configured to interface with a client application layer associated with the manufacturing environment. The data and machine learning layers can include a data collector configured to receive data from at least one sources within the client application layer. The data and machine learning layers can include a dataset generator configured to enable a user to create one or more customized datasets from the data. The data and machine learning layers can include a model management module configured to enable the user to build, train and/or update one or more machine learning models using at least in part the one or more customized datasets. The data and machine learning layers can include an inference module configured to use the one or more machine learning models for generating one or more predictions as one or more processes are being performed and/or equipment is being operated in the manufacturing environment. Systems can include a plurality of data stores configured to store at least the data, new data updates, the one or more customized datasets, and the one or more machine learning models. In some embodiments, the plurality of data stores comprise a database configured to store the data received from the at least one source within the client application layer.

Some VM systems can model processes and characteristics related to control or monitoring of manufacturing processes, e.g., processing of wafers in the semiconductor industry. Statistically modeling processes and characteristics may use, in part, current data or historical data, e.g., measurements from contemporary sensor data or historical sensor data. Virtual metrology systems may provide more accurate measurements to, for example, control or monitor manufacturing processes. Virtual metrology systems and methods may, for example, increase productivity, improve quality, or lower maintenance costs when compared to physical inspections of manufacturing processes using traditional metrology. For example, VM systems and methods may be able to sample all or substantially all units (e.g., semiconductor wafers) in a manufacturing process whereas human operators using traditional metrology may be able to sample only a small fraction of units. Virtual metrology systems and methods may use, in part, ML methods to predict process variables or target properties to optimize process control or monitoring in manufacturing processes.

Typical VM systems are deficient for at least a few reasons. Some systems may not be able to model data drifts, data shifts, or hierarchical data structures observed in manufacturing processes such as semiconductor manufacturing processes. Data drifts may generally refer to gradual changes of process dynamics due to, for example, aging of equipment used in manufacturing processes. Data shifts may generally refer to abrupt changes of process dynamics due to, for example, external operations such as maintenance or calibration. Advanced process control methods associated with VM may need accurate predictions of process variables or target properties in manufacturing processes. However, some systems may not be able to model non-stationarities observed in real or actual data, e.g., contemporary or historical sensor data. Non-stationarities can be generated in, for example, semiconductor manufacturing processes such as chemical vapor deposition (CVD), etching, diffusion, or other processes. For example, data drifts can cause steady or slow decreases in the accuracy of predictions associated with VM models. Data shifts can cause abrupt failures of VM models. Some VM systems using moving window-based methods can be inaccurate due to, for example, selecting small subsets of data. Some VM systems using just-in-time learning methods cannot adapt to changes in the underlying relationships between process variables or target properties.

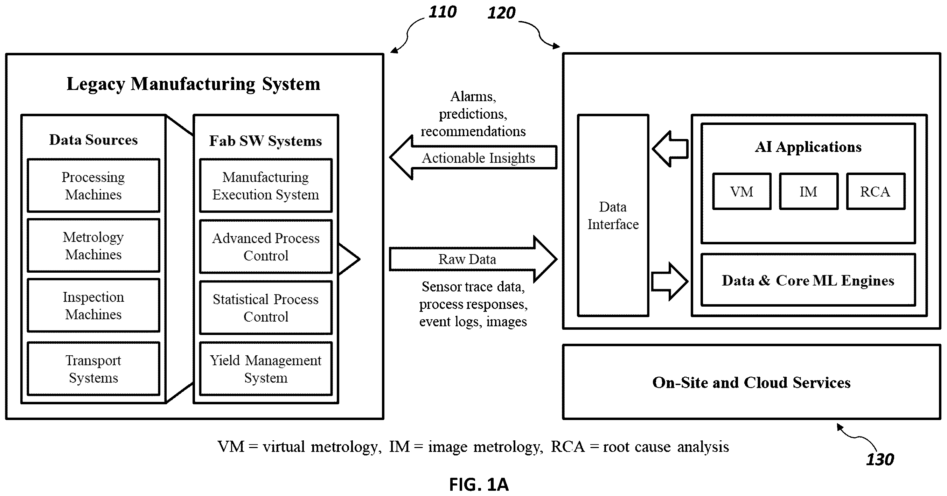

In some embodiments, the manufacturing environment is associated with at least one of semiconductor manufacturing, electronics manufacturing, battery manufacturing, automotive manufacturing, or pharmaceutical manufacturing. Systems described herein (e.g., systems for VM, RCA, or IM) can be used to optimize process control or monitoring in manufacturing environments. For example, as illustrated in **FIG. 1A****,** manufacturing environments may be associated with legacy manufacturing systems **110.** Legacy manufacturing systems **110** may be associated with legacy data sources and legacy software systems.

Further illustrated in **FIG. 1A****,** legacy manufacturing systems **110** may be associated with legacy data sources configured to generate or transmit data from legacy manufacturing systems **110.** Data sources can include data generated or received from processing equipment or machines, metrology instruments or machines, inspection equipment or machines, transport equipment or machines, processing sensors, or equipment sensors. Data from data sources can include data generated or received contemporaneously (e.g., real-time data) or received or generated noncontemporaneously (e.g., historical data). Systems described herein can use contemporary data or historical data to build more accurate models (e.g., VM, RCA, or IM models) or to improve existing models thereof.

Further illustrated in **FIG. 1A****,** legacy manufacturing systems **110** may be associated with legacy software systems configured to receive data from data sources, analyze data from data sources, or generate data from data sources. Legacy software systems can include manufacturing execution systems (MES), advanced process control (APC) systems, statistical process control (SPC) systems, recipe management (RMS) systems, and the like. Legacy manufacturing systems **110** may be associated with data hubs configured to receive, store, or transmit data.

Further illustrated in **FIG. 1A****,** systems **120** can receive data from legacy manufacturing systems **110** to generate predictions or recommendations for optimizing control or monitoring of manufacturing processes. Data can include raw data (e.g., unprocessed data) and processed data for use by systems **120** to train ML models for optimizing process control or monitoring of manufacturing processes. Raw data received from legacy manufacturing systems **110** can include, for example, sensor trace data, process responses, logs, images, and the like described elsewhere herein. In some cases, systems **120** may include data interfaces, described elsewhere herein, for receiving, processing, or transmitting data. Data interfaces can be configured to collect data, validate data, or wrangle data.

Further illustrated in **FIG. 1A****,** systems **120** may be configured with artificial intelligence (AI) applications to develop ML models for generating predictions or recommendations. Predictions or recommendations can be used for optimizing control or monitoring of legacy manufacturing systems **110.** Machine learning models can include inference models for generating insights from development of ML models, e.g., insights from training, testing, tuning, or validating ML models. In some cases, systems **120** may include serving agents configured in a feedback loop for transmitting or publishing predictions, recommendations, or insights to optimize legacy manufacturing systems **110.**

Further illustrated in **FIG. 1A****,** systems **120** may be configured to utilize infrastructure **130,** described elsewhere herein, to facilitate generating ML models for optimizing process control or monitoring of legacy manufacturing systems **110.** Infrastructure **130** can include services configured on-site, services configured in one or more cloud services, ML frameworks, distributed data processing systems, cloud computing frameworks, and the like for optimizing process control or monitoring of manufacturing processes in manufacturing environments.

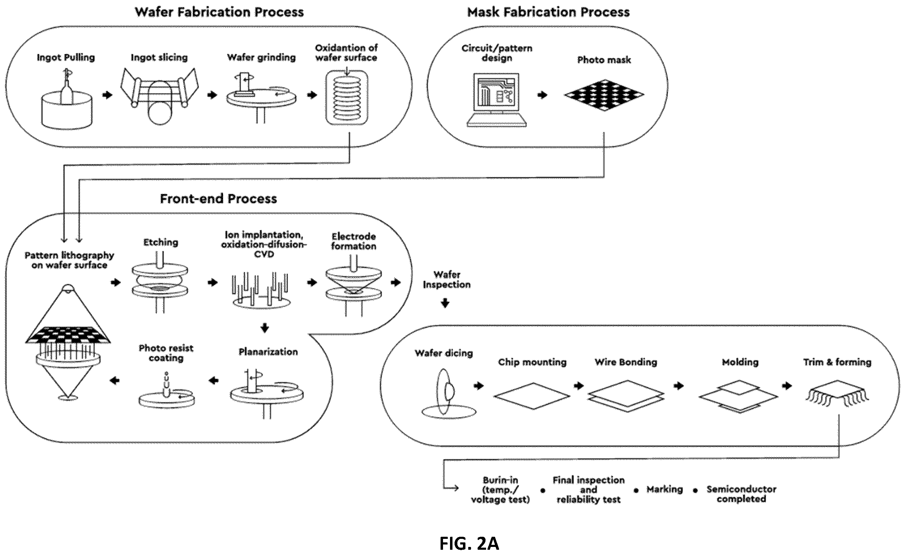

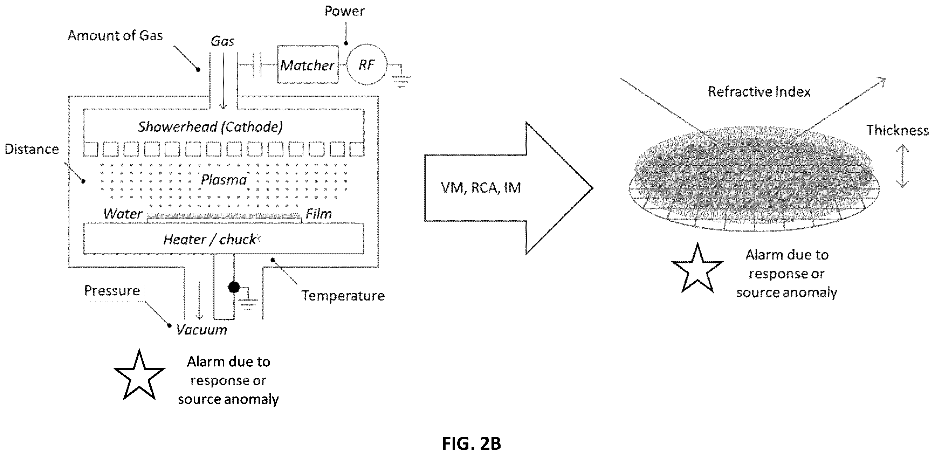

Manufacturing environments may be associated with semiconductor manufacturing environments having semiconductor manufacturing processes. For example, as illustrated in **FIGs. 2A-2B****,** semiconductor manufacturing environments may be associated with semiconductor manufacturing equipment configured to carry out semiconductor manufacturing processes. Systems **120** can generate predictions or recommendations for optimizing process control or monitoring of semiconductor manufacturing processes e.g., process variables, target properties, or root causes of anomalies. Processes can include wafer fabrication processes, e.g., ingot pulling, ingot slicing, wafer grinding, or oxidation. Processes can include mask fabrication processes, e.g., circuit design, pattern design, or photo masking. Processes can include front-end processes, e.g., pattern lithography, etching, chemical vapor deposition (e.g., ion implantation, oxidation, diffusion), photoresist coating, or planarization. Processes can include intermediate inspections e.g., inspection of wafers. Processes can include back-end processes, e.g., wafer dicing, chip mounting, wire bonding, molding, trimming, or forming. Processes can include intermediate testing, e.g., burn-in temperature or voltage testing. Processes can include final inspection or reliability testing. Processes can include marking.

### Systems for virtual metrology (VM)

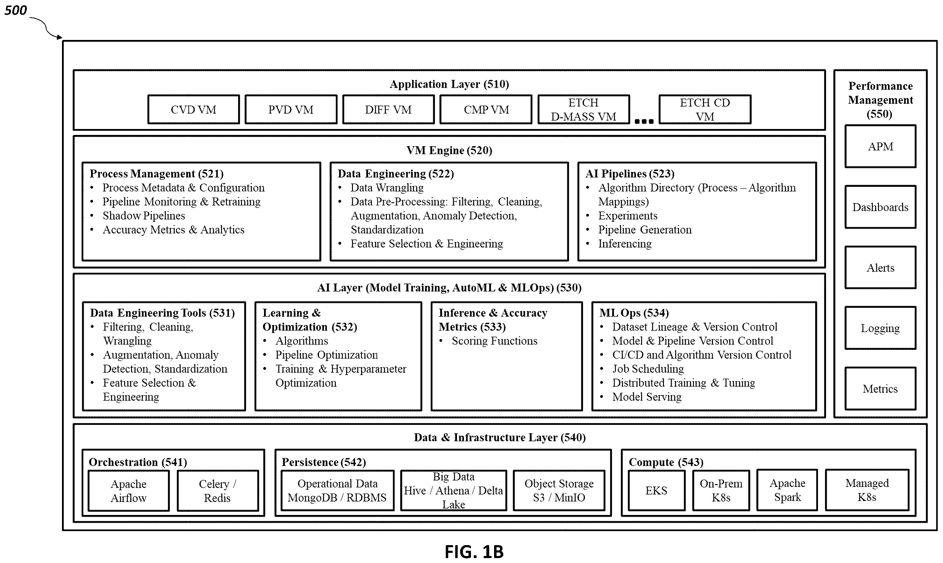

Illustrated in **FIG. 1B** is a high-level system architecture **500** ("architecture **500"** hereinafter) for implementing systems **120** of the present disclosure for optimizing process control or monitoring of manufacturing processes in manufacturing environments. Architecture **500** comprises layers or modules configured to implement systems **120.** Layers or modules can include application layer **510,** VM engine layer **520,** AI layer **530,** data and infrastructure layer **540,** and performance management layer **550.**

Further illustrated in **FIG. 1B****,** architecture **500** comprises application layer **510** configured to provide user interaction with systems **120.** Layer **510** can comprise layers or modules configured to provide user interaction with systems or processes associated with semiconductor manufacturing processes. Processes can include processes related to chemical vapor deposition (CVD) processes, physical vapor deposition (PVD) processes, diffusion (DIFF) processes, chemical-mechanical planarization (CMP) processes, etching (D-Mass) processes, etching critical dimension (CD) processes, or any semiconductor manufacturing process such as illustrated in **FIG. 2A****.**

Further illustrated in **FIG. 1B****,** architecture **500** comprises VM engine layer **520** configured for process management **521,** data engineering **522,** and AI pipelines **523.** Process management **521** can comprise modules or layers configured to process metadata from data sources; monitor or retrain ML pipelines; shadow ML pipelines; or generate accuracy metrics or analytics associated with ML pipelines. Data engineering **522** can comprise modules or layers configured to wrangle data; to pre-process data (e.g., filtering, cleaning, augmenting, detecting anomalies, standardizing, and the like); or to select or engineer features. AI pipelines **523** can comprise modules or layers configured to generate algorithm directories; to process algorithm mappings; to generate or perform experiments; to generate pipelines; or to generate inferences.

Further illustrated in **FIG. 1B****,** architecture **500** comprises AI layer **530** configured for data engineering **531,** learning and optimization **532,** inference and accuracy metrics **533,** or ML operations **534.** Data engineering **531** can comprise modules or layers configured to process data (e.g., filtering, cleaning, wrangling, and the like); to augment data; to detect anomalies; to standardize data; or to select or engineer features. Learning and optimization **532** can comprise modules or layers configured to determine, generate, or use algorithms for learning or optimization; to optimize or learn pipelines; to optimize or learn training; or to optimize or learn hyperparameters. Inference and accuracy metrics **533** can comprise modules or layers configured to score functions associated with ML pipelines. ML operations **534** can comprise modules or layers configured to generate dataset lineage control; to generate dataset version control; to generate ML model version control; to generate pipeline version control; to generate continuous integration (CI) version control; to generate continuous deployment (CD) version control; to generate job scheduling; to generate distributed training and tuning; or to serve ML models.

Further illustrated in **FIG. 1B****,** architecture **500** comprises data and infrastructure layer **540** configured for orchestration **541,** persistence **542,** or computing **543.** Orchestration **541** can comprise modules or layers configured to provide workflow services (e.g., Apache^{®} Airflow) or deployment services (e.g., RedisAI^{®}). Persistence **542** can comprise modules or layers configured to provide storage of data (e.g., operational data) in relational database management systems (RDBMS, e.g., MongoDB^{®}); to provide storage of big data (e.g., Hive^{®}, Athena^{®}, Delta Lake^{®}, and the like); or to provide object storage (S3, e.g., MinIO^{®}). Computing **543** can comprise modules or layers configured to provide on-site computing services (e.g., on-premise K8^{®}, Kubernetes^{®}, managed K8^{®}, and the like), cloud computing services (e.g., Elastic^{®} Kubernetes Services, Apache^{®} Spark, and the like), or any computing service configured to perform computing associated with development of ML models.

Further illustrated in **FIG. 1B****,** architecture **500** comprises performance management layer **550** configured to receive, generate, or transmit performance data associated with architecture **500.** Performance management layer **550** can comprise modules or layers configured with application and performance monitoring (APM), dashboards, alerts, logging, metrics, and the like. In some embodiments, the system further comprising a front-end user management module comprising a graphical user interface (GUI) configured to display the one or more performance metrics on a dashboard.

### High-level system workflows for virtual metrology (VM)

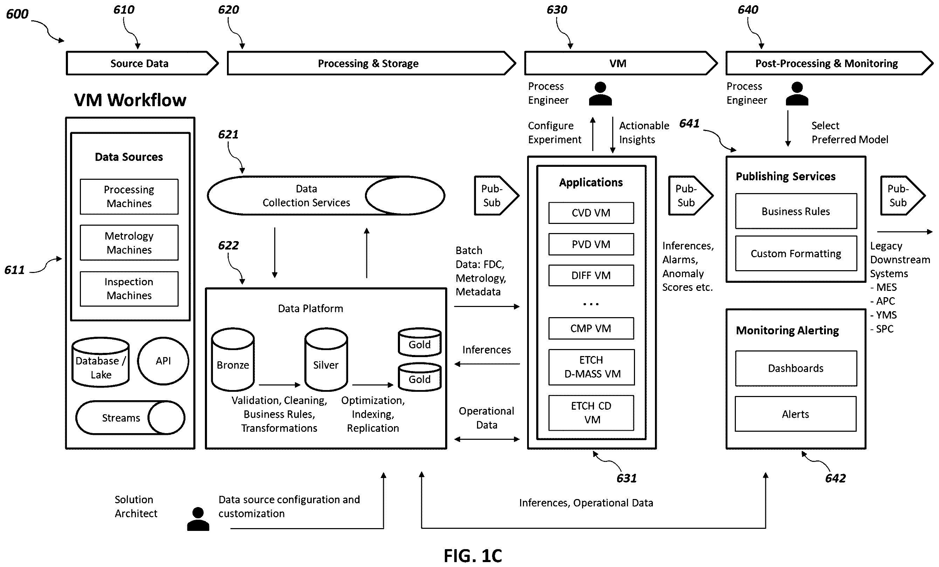

Illustrated in **FIG. 1C** is a high-level system workflow **600** ("workflow **600"** hereinafter) for implementing systems **120** or architecture **500** of the present disclosure for optimizing process control or monitoring of manufacturing processes in manufacturing environments. Workflow **600** comprises workflows configured to implement systems **120.** Workflows can include workflows associated with source data **610,** processing and storage **620,** VM **630,** and post-processing and monitoring **640.**

Further illustrated in **FIG. 1C****,** workflow **600** comprises workflows associated with source data **610.** Workflows can comprise workflows associated with receiving, generating, storing, or transmitting data from legacy manufacturing systems **110.** Data sources **611,** described elsewhere herein, can include, e.g., processing machines, metrology machines, or inspection machines. Data can be received or transmitted using application programming interfaces (APIs) configured to receive or transmit data. Data from data sources can be stored in databases configured to store data. Data can be transmitted in streaming mode or batch mode. Data from source data **610** can be transmitted to processing and storage **620.** Processing and storage **620** can receive or fetch data from source data **610.**

Further illustrated in **FIG. 1C****,** workflow **600** comprises workflows associated with processing and storage **620.** Workflows can comprise workflows associated with data collection services **621** or data platforms **622.** Data collection services **621** can include databases configured to receive or transmit data to or from data platforms **622.** In some cases, data collection services **621** may use pub/sub services to transmit data directly to VM **630.** Data collection services **621** can comprise workflows associated with transforming data from low-resolution data ("bronze"), to medium-resolution data ("silver"), and to high-resolution data ("gold"). Workflows associated with transforming data to medium-resolution data can include validating data, cleaning data, applying business rules to data, or other typical data transformations. Workflows associated with transforming data to high-resolution data can include optimizing data, indexing data, replicating data, or other typical data transformations. In some case, users (e.g., solution architects) may interact with processing and storage **620** to, e.g., customize or configure processing and storage **620.** Data from processing and storage **620** can be transmitted to VM **630.** VM **630** can receive or fetch data from source data **610** processing and storage **620.**

Further illustrated in **FIG. 1C****,** workflow **600** comprises workflows associated with VM **630.** Workflows can comprise workflows associated with applications **631.** Applications **631,** described elsewhere herein, can include chemical vapor deposition (CVD) applications, physical vapor deposition (PVD) applications, diffusion (DIFF) applications, chemical-mechanical planarization (CMP) applications, etching (D-Mass) applications, etching critical dimension (CD) applications, or any semiconductor manufacturing application such as described in **FIG. 2A****.** Users, e.g., process engineers, may interact with applications **631** to, e.g., configure or run experiments, provide actionable insights, or receive actionable insights. Data from VM **630** can be transmitted to post-processing and monitoring **640.** Data can include, for example, data associated with predictions, recommendations, inferences, alarms, anomaly scores, or any data described herein. Post-processing and monitoring **640** can receive or fetch data from VM **630.**

Further illustrated in **FIG. 1C****,** workflow **600** comprises workflows associated with post-processing and monitoring **640.** Workflows can comprise workflows associated with publishing services **641** or monitoring alerting services **642.** Publishing services **641** can comprise workflows associated with business rules or custom formatting. Publishing services **641** may transmit data to legacy manufacturing systems **110,** e.g., MES, APC, YMS, SPC, and the like. Users, e.g., process engineers, can select ML models. Selected ML models can be preferred ML models. Monitoring alerting services **642** can comprise workflows associated with dashboards or alerts.

Further illustrated in **FIG. 1C****,** workflow **600** comprises workflows for transmitting or receiving data between processing and storage **620** and post-processing and monitoring **640.** Data can include data associated with inferences or operational data. Workflow **600** comprises workflows for transmitting or receiving data between processing and storage **620** and VM **630.** Data can include data associated with batch data (e.g., fault detection and classification (FDC) data, metrology data, metadata, and the like), inferences, operational data, and the like.

### High-level AI workflows for virtual metrology (VM)

Illustrated in **FIGs. 3A-3F** is a high-level AI workflow **300** ("workflow **300"** hereinafter) for implementing systems **120,** architecture **500,** or workflow **600** of the present disclosure for optimizing process control or monitoring of manufacturing processes in manufacturing environments. As illustrated in **FIG. 3A****,** workflow **300** comprises workflows associated with data interface **310,** product layer **320,** infrastructure layer **330,** AI layers **340,** and product engineering layer **350.**

As illustrated in **FIG. 3B****,** workflow **300** can include a data interface **310** configured for solutions engineering or customer system integration. In some cases, data interface **310** is configured by users, e.g., process engineers. In some cases, data interface **310** is configured to connect customer data sources (e.g., legacy manufacturing systems **110)** to systems **120.** Data interface **310** can include databases, e.g., data warehouses, configured to receive data, fetch data, or store data associated with equipment or units in manufacturing processes (e.g., legacy manufacturing systems **110).** Data interface **310** may receive or fetch data via APIs configured to receive data or fetch data.

In some embodiments, the data comprises a plurality of data types and datasets comprising of: (1) historical process data, (2) current process data, (3) historical measurement data of one or more metrics, (4) current measurement data of one or more metrics, (5) operation data, or (6) equipment specification data. Data can include raw data, e.g., trace data from FDC systems. Data can include data of different structures, e.g., structured data, unstructured data, semi-structured data, or combinations thereof. Data can include data of different data types, e.g., integer data, floating-point data, string data, Boolean data, date data, time data, object data, variant data, or combinations thereof. Data can include response data from metrology equipment, metadata or operations data from customer databases, alarm data, machine logs, system logs, and the like. Data can include data associated with system generated logs or machine generated logs. In some embodiments, the data comprises batch data, equipment data, process data, metadata and/or measurement data.

Data can include data associated with response data, measurement data, FDC data, response limits data, operations data, and the like. Response data can include measurement identification (ID), wafer ID, wafer origin, rework status, wafer lot ID, equipment ID, chamber ID, module ID, responses, start day or time, end day or time, created day or time, updated day or time, sample, and the like. Measurement data can include lot code, measurement operation ID, alias, fabrication ID, fabrication selector, fabrication areas, product ID, description, response parameters, and the like. Fault detection and classification data can include operations ID, wafer ID, process step ID, process step name, origin, recipe ID, lot ID, equipment ID, chamber ID, module ID, summary of FDC, start day or time, end day or time, measurement status, sample number, rework status, operation start day or time, operation end day or time, created day or time, updated day or time, and the like. Response limits data can include target limits, control limits (e.g., upper limit, lower limit), specification limits (e.g., upper limit, lower limit), and the like. Operations data can include alarm data, lot code, operation ID, alias, fabrication ID, fabrication selector, fabrication area, product ID, description, FDC names, steps, recipe ID, and the like.

Data can include data associated with generating features or models. In some embodiments, the dataset generator is configured to automate selection of one or more features within the one or more customized datasets. Data can be associated with dataset specifications, feature descriptions, feature specifications, models, model predictions, model performance, prediction performance by module, and the like. Data associated with dataset specifications can include measurements ID, operations ID, dataset name, dataset description, selected response names, process steps, selected recipe IDs, owner, created day or time, configuration of wrangling, and the like. Data associated with feature descriptions can include FDC name, score, step ID, and the like. Data associated with feature specifications can include dataset specification ID, features, collinear features, created day or time, updated day or time, and the like. Data associated with models can include measurements ID, dataset specification ID, name, fabrication ID, lot code, fabrication area, hyperparameters, selected features, creator, link to blobs, status, created day or time, updated day or time, and the like. Data associated with model predictions can include model ID, wafer ID, lot code, measurement operation ID, lot ID, equipment ID, chamber ID, module ID, predictions, created day or time, operation end day or time, and the like. Data associated with model performance can include deployment days, model ID, base model end day or time, target measurement, upper or lower measurement limits (UML, LML), upper or lower control limits (UCL, LCL) statistical six sigma, root-mean-square-error (RMSE), R-squared (R²), topological data analysis (TDA), collected days, data count, TDA data count, TDA sign count, summary of response, summary of square response, summary of error, created day or time, and the like. Data associated with model performance can include prediction performance by module deployment days, model ID, module ID, base model end day or time, target measurement, upper or lower measurement limits, statistical six sigma, root-mean-square-error (RMSE), R-squared (R²), TDA, collected days, data count, TDA data count, TDA sign count, summary of response, summary of square response, summary of error, created day or time, and the like.

Data interface 310 can include data pipelines configured to modify or otherwise transform data before saving in databases. Modifying or transforming data can include modifying or transforming data into other data structures, data types, or combinations thereof. Alternatively or additionally, data pipelines can be configured to modify or otherwise transform data before transmitting to product layer 320 into other data structures, data types, or combinations thereof.

Further illustrated in FIG. 3B, data interface 310 can include a user interface such as a graphical user interface (GUI) (not shown for clarity). A graphical user interface can allow the user to select a manufacturing process associated with, e.g., a fab number, an area name, a product identification (ID), a process ID, an operation ID, a measurement operation ID, and the like. The user may specify a date range for model development and select other data processing operations, e.g., data wrangling for development of ML models. In some cases, a graphical user interface can be configured for selecting relevant features, building datasets, identifying and combining recipes, selecting time windows, selecting equipment types, selecting chamber types, and the like. Workflow 300 may perform feature extraction, feature selection, feature engineering, model development, or combinations thereof. In some cases, the user can select features to be used for model development based, in part, on domain knowledge of the user.

As illustrated in **FIG. 3C****,** workflow **300** can include product data layers **320** configured to receive data or fetch data from data interface **310.** Product data layers **320** may receive or fetch data via APIs configured to receive data or fetch data. Product data layers **320** may validate or otherwise transform data received from data interface **310.** In some cases, product data layers **320** may be configured to use or process metadata associated with data for analyzing ML model performance, monitoring and observability functions, product usage and performance measurements and statistics, model and experiment tracking, and the like. In some cases, product data layers **320** may automatically validate data based on metadata, operations data, statistical methods, ML methods, or any combination thereof. In some cases, product data layers **320** may automatically validate data based on rules (e.g., business rules) determined by users, e.g., process engineers, solutions engineers, domain experts, end users, and the like. Modifying or transforming data can include modifying or transforming data into other data structures, data types, or combinations thereof. Product data layers **320** can include databases, e.g., data warehouses, configured to receive data, fetch data, or store data after data is validated or otherwise transformed. Product data layers **320** can include data pipelines configured to modify or otherwise transform data before transmitting to artificial intelligence (AI) layers **340** ("AI layers **340"** hereinafter). Modifying or transforming data can include modifying or transforming data into other data structures, data types, or combinations thereof. Product data layers **320** may transmit or push data to AI layers **340** via APIs configured to transmit data or push data. Product data layers **320** can transmit or push data in batch mode or real-time mode. In some cases, AI layers **340** may be configured to pull data from product layers **320.**

As illustrated in **FIG. 3E****,** workflow **300** can include AI layers **340** configured to develop or deploy ML models or inference models. Systems described herein may generate predictions or recommendations for process variables, target properties, root causes of anomalies, or combinations thereof. Predictions or recommendations can be used for optimizing process control or monitoring of manufacturing processes in manufacturing environments. In some cases, feature weights associated with training, testing, or validating ML models may provide insights ("inferences") for users. Insights can allow users to determine which features the ML models used to generate predictions or recommendations. AI layers **340** can receive or fetch data from product data layers **320** via APIs configured to receive data or fetch data. AI layers **340** can transmit predictions or recommendations to product engineering layers **350** via APIs configured to transmit predictions or recommendations.

Further illustrated in **FIG. 3E****,** AI layers **340** can comprise modules configured to develop ML models or inference models or otherwise deploy ML models or inference models. In some cases, a ML model is used interchangeably with an inference model. In some cases, an inference model derives insights from the ML model, e.g., insights about important features or weightings used to the train the ML model. Modules can include: module **341** configured for data quality; module **342** configured for model development; module **343** configured for deploying models; module **344** configured for analyzing performance of models; module **345** configured for observability of models; module **346** configured for continuous integration or delivery of models; module **347** configured for scaling models; or module **348** configured for user interfacing with models.

Further illustrated in **FIG. 3E****,** AI layers **340** can include module **341** configured for data quality, e.g., data scrubbing. Module **341** can be configured to validate data, transform data, perform statistical methods on data, or combinations thereof. Operations may include operations associated with row compression, one-hot encoding, binning, normalization, standardization, data enrichment, or combinations thereof. Data may be transmitted to module **342.** Data may be received or fetched by module **342.**

Further illustrated in **FIG. 3E****,** AI layers **340** can include module **342** configured for model development. Data may be received or fetched from module **341.** Operations may include operations associated with feature extraction, feature selection, feature engineering, model development, or combinations thereof. Statistical methods or ML methods may determine features for including in model development. Statistical methods can be associated with detrending, linear regression, logistic regression, k-nearest neighbors, k-means clustering, support vector machines, artificial neural networks, decision trees, or combinations thereof.

For example, statistical or ML methods may process, e.g., FDC trace data to extract features. In some cases, statistical methods may include summary mean of fault detection and classification (FDC) trace data. For example, FDC trace data may be received from 200 sensors associated with equipment in manufacturing processes. The trace data can include a time-series data of sensor measurements measured every second for twenty minutes. Statistical methods may include methods for determining statistical properties of data. For example, statistical methods can include averaging the trace data to obtain a 200-dimensional feature vector.

For example, statistical or ML methods may process, e.g., FDC trace data, to select features. In some cases, sliding window correlation coefficient (SWCC) methods can be used to select the most relevant features. Operations associated with sliding window correlation coefficient (SWCC) methods can include calculating correlation coefficients and averaging correlation coefficients using a Fisher Z transformation. Features may be selected that have the largest sliding window correlation coefficient (SWCC) values. In some cases, multicollinearity among features may be used for feature selection.

For example, statistical or ML methods may process, e.g., FDC trace data, to detrend or normalize features. Methods may calculate an innovation of X and Y, wherein X can include features from FDC and Y can include response measurements. To generate an innovation of X and Y, detrending methods may subtract weighted average values of past data to thereby determine temporal differences from past data. Temporal differences of Y can better describe the relationship with X. Compared to typical methods such as deep learning or other statistical methods (e.g., random forest or partial least-squares), detrending may provide better predictions or recommendations. In some cases, X and Y may be normalized after detrending.

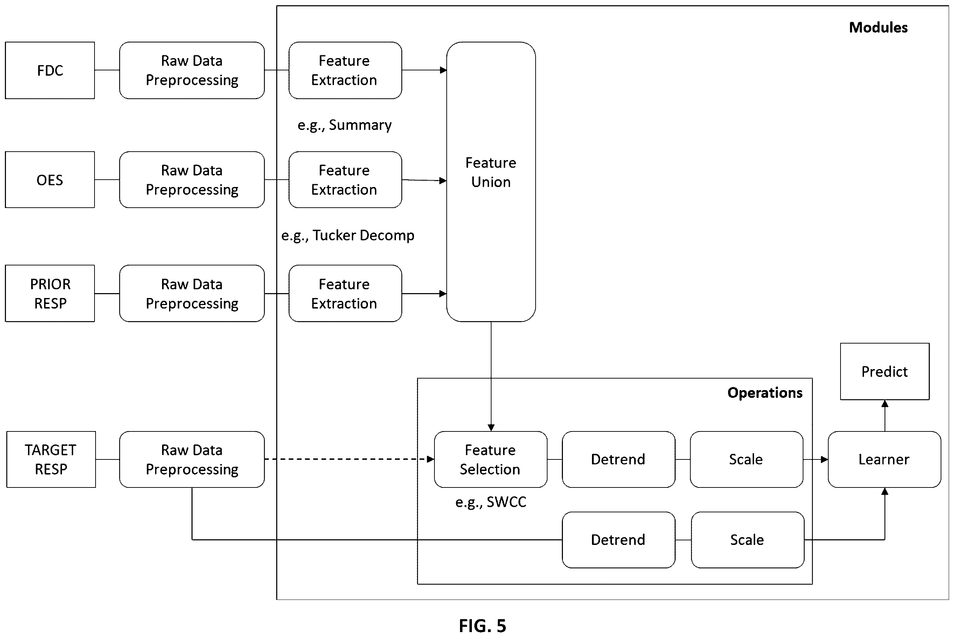

For example, statistical or ML methods may process, e.g., FDC trace data, to generate models using online learning. As illustrated in **FIG. 5****,** online learning methods may include methods associated with follow-the-leading-history (FLH). For example, methods may include generating new regressors *f(x)* at each time point of a plurality of *N* data points, e.g., a time point associated with an (*xᵢ*, *yᵢ*) pair of *N* data points. Linear regressors *f(x)* having *N* linear regressors may be obtained from the *N* data points. A weight *wⱼ* may be assigned to each linear regressor *f(x)* to generate an ensemble regressor as *w₁f₁(x) + w₂f₂(x)* + *w_{N}f_{N}(x).* For each (*xᵢ*, *y*ᵢ), *yᵢ* can be predicted from *N* regressors.

In some cases, regressors can include ridge regressors, linear regressors, or nonlinear regressors. Using hyperparameter optimization (HPO), weights w may be updated using rules based at least on regression errors of each regressor. Hyperparameter optimization (HPO) can include distributed methods for stratified modeling using Laplacian regularization. Determining regressor errors can include methods for determination of, e.g., root-mean-square-error (RMSE), or other typical descriptors or metrics for determining performance of ML models. In some cases, metrics can include custom metrics, e.g., metrics defined by users. Determining regressor errors can include methods for soft-max, e.g., normalizing data into a probability distribution probabilities proportional to the exponentials of the inputs. In some cases, regressors may be pruned based on rules associated with performance history, e.g., errors of regressors. In some cases, regressors may be pruned based on rules associated with a lifespan of regressors. Updating or pruning regressors may be associated with data drifts or data shifts in equipment or units associated with manufacturing processes. Machine learning models may be transmitted to module **343** configured for deploying models. Module **343** may receive or fetch ML models.

Further illustrated in **FIG. 3E****,** AI layers **340** can include module **343** configured for deploying models. Module **343** may receive or fetch models from module **342.** Module **343** may be configured to retrain models, deploy models, or serve models. Retraining models may include scheduling models for evaluation or optimization, evaluating models, optimizing models, and the like. Deploying models can include deploying models in stealth mode (e.g., shadow models) or deploying models in staged mode (e.g., canary models). Stealth mode can include providing data to newly deployed models but not providing predictions or recommendations to users or other systems. Older models can continue to provide predictions or recommendations while newly deployed models can be analyzed for performance, e.g., accuracy of predictions or recommendations. Staged mode can include providing data to newly deployed models and providing predictions or recommendations to some users or some other systems to detect e.g., early issues or errors with newly deployed models. Model serving can include packaging models for deployment and use by users associated with manufacturing environments. Module **343** may transmit or publish predictions, recommendations, performance metrics, and the like to product engineering layers **350** via APIs configured to transmit predictions, recommendations, performance metrics, and the like.

Further illustrated in **FIG. 3E****,** AI layers **340** can include module **344** configured for analyzing performance of models. Module **344** may be configured to perform integration tests, back testing, sensitivity analysis, stress tests, and the like. Model performance may be used, in part, to determine further operations by modules **341, 342, 343,** or combinations thereof to obtain model performance meeting a prescribed threshold. Prescribed thresholds may be associated with accuracy or confidence levels of predictions, recommendations, performance metrics, and the like. In some embodiments, the one or more performance metrics are derived from at least sensitivity analysis or stress tests.

Further illustrated in **FIG. 3E****,** AI layers **340** can include module **345** configured to determine observability of models. Module **345** may be configured to monitor, troubleshoot, or explain models as models move from development to deployment. Operations can include analyzing performance of models, analyzing drifts or shifts in models, analyzing data quality of models, explaining results of models, and the like. Insights ("inferences') from module **345** may determine further operations by modules **341, 342, 343,** or combinations thereof to obtain model performance meeting a prescribed threshold. Prescribed thresholds may be associated with accuracy or confidence levels of predictions, recommendations, performance metrics, and the like.

Further illustrated in **FIG. 3E****,** AI layers **340** can include module **346** configured for continuous integration or delivery of models. Pipelines for continuous deployment or integration of models may be executed upon events. Events can include: on demand (e.g., ad-hoc manual execution of pipelines), on schedule (e.g., newly labelled data is available on a schedule such as daily, weekly, or monthly), on availability of new training data, on degradation of model performance, on significant changes in distribution of data, and the like.

Continuous integration can include operations for generating packages, generating container images, generating executables, generating testing, and the like. Testing can include testing feature engineering methods, testing methods implemented in models, testing for model training convergence, testing for model training outputs (e.g., does not generate outputs that are not a number (NaN)), testing that model pipeline produce expected artifacts, testing integration between pipeline components, and the like.

Continuous delivery can include operations such as delivering pipeline implementations to target environments for generating predictions or recommendations. Continuous delivery include operations such as verifying compatibility of models with equipment or units associated with manufacturing processes, testing predictions or recommendations by comparing inputs with expected outputs, testing prediction or recommendation performance, validating data for retraining or batch predictions or recommendations, verifying models meet prediction or recommendation performance targets before deployment, automating deployment to test environments, automated deployment to pre-production environments, semi-automated deployment to pre-production environments, manual deployment to production environments after several successful runs of pipelines on pre-production environments. Module **346** for continuous integration or delivery of models may perform integration or delivery using feature stores, dataset versioning, experiment management, model registries, and the like. Feature stores can include a central location for standardized definitions for features, storage of features, or access to features for training, testing, validating, serving, delivering, or deploying models.

Further illustrated in **FIG. 3E****,** AI layers **340** can include module **347** configured for scaling models. Module **347** may be configured to scale models by training, testing, or validating models with data received from more than one equipment, more than one unit, or more than one process. For example, data may be associated with chemical vapor deposition (CVD) processes. Chemical vapor deposition (CVD) processes may include one or more subprocesses, one or more equipment, or one or more chambers configured to perform chemical vapor deposition (CVD) processes. Data received from subprocesses, equipment, or chambers can be used to generate models for optimizing process control or monitoring (e.g., predicting or recommending) across all subprocesses, equipment, or chambers.

Further illustrated in **FIG. 3E****,** AI layers **340** can include module **348** configured for user interfacing with models during model development, continuous integration, continuous delivery, or scaling. Module **348** may be configured to generate logs or metrics associated with continuous integration, continuous delivery, or scaling. Module **348** may be configured to monitor logs or metrics during continuous integration, continuous delivery, or scaling. Module **348** may be configured to generate user dashboards or alerts from logs. Alerts may be associated with continuous integration, continuous delivery, or scaling. Dashboards can be configured to display or transmit logs or metric to users, allow users to retrieve logs or metrics, allow users to process logs or metrics, allow users to manipulate logs or metrics, and the like. In some cases, module **348** may be configured to generate ML logs associated with model development.

As illustrated in **FIG. 3F****,** workflow **300** can include product engineering layers **350** configured to provide predictions, recommendations, performance metrics, and the like to equipment, units (e.g., customer systems), or users associated with manufacturing processes in manufacturing environments (e.g., legacy manufacturing systems **110**). Product engineering layers **350** may be configured to receive or fetch predictions, recommendations, performance metrics, logs, and the like from AI layers **340** via APIs, e.g., a product back-end, a product front-end, or any means for receiving, storing, transmitting, or fetching data. In some cases, predictions, recommendations, performance metrics, logs, and the like can be stored in a product back-end and transmitted to equipment, units (e.g., customer systems), or users via a product back-end. The providing of predictions, recommendations, performance metrics, and the like may be configured in a feedback loop with equipment or units to optimize process control or monitoring of manufacturing processes in manufacturing environments.

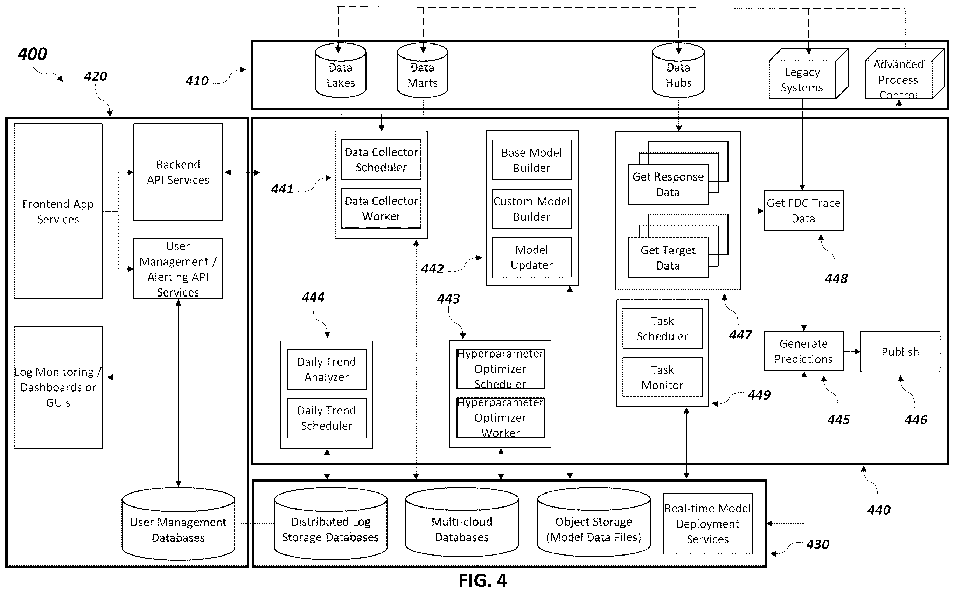

As illustrated in **FIG. 3D****,** workflow **300** can include infrastructure module or layer **330** configured to facilitate predictions or recommendations associated with optimizing process control or monitoring in manufacturing environments. Module **330** can comprise relational databases; multi-cloud databases; runtime databases; runtime containers; deployment, scaling, or management services; batch data processing services, streaming data processing services, or machine leaning (ML) services; ML workflow services; distributed scaling and modeling services; distributed log storage database services; and the like. Module **330** may be associated with APIs configured to perform services or methods of module **330.** Module **330** can be configured to use similar methods as module **430** of **FIG. 4****.** A nonlimiting example of a relational database includes PostgreSQL^{®}. A nonlimiting example of a multi-cloud database includes MongoDB^{®}. A nonlimiting example of a runtime container includes Docker^{®}. A nonlimiting example of a deployment, scaling, or management service includes Kubernetes^{®}. A nonlimiting example of a batch data processing service, streaming data processing service, or ML service includes Apache^{®} Spark. A nonlimiting example of a ML workflow service includes Apache^{®} Airflow. A nonlimiting example of a distributed scaling and modeling service includes Ray^{®}. A nonlimiting example of a distributed log storage database service includes Elastic Search^{®} Kibana. A nonlimiting example of dashboards includes Grafana^{®} or Kibana^{®}. A nonlimiting example of dashboard alerting includes Grafana^{®} or PagerDuty^{®}.

### AI workflows for virtual metrology (VM)

Illustrated in **FIG. 4** is an AI workflow **400** ("workflow **400"** hereinafter) for implementing systems **120,** architecture **500,** workflow **600,** or workflow **300** of the present disclosure for optimizing process control or monitoring of manufacturing processes in manufacturing environments. Workflow **400** can include modules configured to perform methods or workflows described herein. Workflow **400** can include a client application module or layer **410** configured to save or transmit data (e.g., customer data) for developing models that generate predictions or recommendations for process control or monitoring. Workflow **400** can include a front-end user management module or layer **420** configured for users to interface with workflow **400.** Workflow **400** can include an infrastructure module or layer **430** configured to manage users or models for optimizing process control or monitoring. Workflow **400** can include data and machine learning modules or layers **440** configured to generate or publish predictions or recommendations for optimizing process control or monitoring.

As illustrated in **FIG. 4****,** workflow **400** can include a client application module or layer **410** configured to save or transmit data for developing models that generate predictions or recommendations for optimizing process control or monitoring in manufacturing environments. Data can include data associated with processing equipment, metrology instruments, inspection equipment, automatic material handling systems, and the like. Data may be saved in databases such as data lakes, data marts, data hubs, and the like. In some cases, legacy systems can transmit data for developing models. Legacy systems may include MES systems, APC systems, SPC systems, RMS systems, and the like. Data can be transmitted to data and machine learning modules or layers **440** via APIs configured to transmit or receive data. In some cases, data may be received or fetched by data collector module **441** in the data and machine learning modules or layers **440.**

As illustrated in **FIG. 4****,** workflow **400** can include data and machine modules or layers **440** configured to generate or publish predictions or recommendations for optimizing process control or monitoring in manufacturing environments. Module **440** can include modules for generating or publishing predictions or recommendations. Modules may include data collector module **441,** model management module **442,** hyperparameter optimization module **443,** model performance evaluation module **444,** predictions or recommendations module **445,** publishing module **446,** data module **447,** FDC trace module **448,** or task module **449.** Module **440** may be configured in a similar as VM engine **520** and AI layer **530** of **FIG 1B****.**

Further illustrated in **FIG. 4****,** the data and machine learning modules or layers **440** can include data collector module **441.** Module **441** can comprise a data collector scheduler and a data collector worker. Data collector scheduler can be configured to receive or fetch data from client application module or layer **410.** Data may be received or fetched via APIs configured to receive or fetch data. In some cases, data is received in batch mode. In some cases, data is received substantially in real time. Data collector worker can be configured to modify or otherwise transform data in a similar manner as module **341** of artificial intelligence (AI) layers **340** of **FIG. 3A** or application layer **510** of **FIG. 1B****.**

In some embodiments, the data collector is configured to receive the data synchronously from at least two different sources. In some embodiments, the data collector is configured to receive the data asynchronously from at least two different sources. In some embodiments, the data collector is configured to receive the data from the at least one source based at least in part on a predetermined schedule. In some embodiments, the data collector is configured to receive the data from the at least one source, based at least in part on detection of one or more events occurring within the manufacturing environment. In some embodiments, the one or more events are associated with a drift, an excursion, a shift, a deviation, or an anomaly in at least one process or a process equipment within the manufacturing environment.

Further illustrated in **FIG. 4****,** the data and machine learning modules or layers **440** can include model management module **442.** Module **442** can comprise modules configured to develop base ML models, develop custom ML models, or update ML models. Module **442** can be configured to use similar methods as module **342** of artificial intelligence (AI) layers **340** of **FIG. 3A****.** In some embodiments, the system further comprise a model performance evaluation module that is configured to generate one or more performance metrics for the one or more machine learning models. Module **442** may be configured in a similar manner as VM engine **520** and AI layer **530** of **FIG. 1B****.**

Further illustrated in **FIG. 4****,** the data and machine learning modules or layers **440** can include hyperparameter optimization (HPO) module **443.** In some embodiments, the model management module is configured to automatically update the one or more machine learning models using hyperparameter optimization. Module **443** can comprise a hyperparameter optimizer scheduler or a hyperparameter optimizer worker. Hyperparameter optimizer scheduler can be configured to schedule optimization of model hyperparameters. In some embodiments, the hyperparameter optimization is performed on a predetermined schedule. Hyperparameter optimizer worker can be configured optimize model hyperparameters. In some embodiments, the hyperparameter optimization is performed based at least in part on detection of one or more events occurring within the manufacturing environment. Optimization may occur when models are trained, tested, or validate to meet a threshold level or performance criteria for generating predictions or recommendations. For example, performance criteria can be associated with root-mean-square-error (RMSE) or soft-max describe elsewhere herein. Module **443** can be configured to use similar modules, methods or workflows as **341** or **342** of artificial intelligence (AI) layers **340** of **FIG. 3A** or VM engine **520** and AI layer **530** of **FIG. 1B****.**

Further illustrated in **FIG. 4****,** the data and machine learning modules or layers **440** can include model performance evaluation module **444.** Module **444** can comprise a daily trend scheduler or a daily trend analyzer. Daily trend scheduler can be configured to schedule analysis of trends associated with performance of models. Trends may be scheduled for time intervals or upon events. For example, time intervals or events can include on demand (e.g., manual schedule), on schedule (e.g., on a schedule such as hourly, daily, weekly, or monthly), on availability of new training data, on degradation of model performance, on significant changes in distribution of data, and the like. Daily trend analyzer can be configured to analyze trends associated with performance of models. Module **444** can be configured to use similar modules, methods, or workflows as **344** or **346** of artificial intelligence (AI) layers **340** of **FIG. 3A** or AI layer **530** of **FIG. 1B****.**

Further illustrated in **FIG. 4****,** the data and machine learning modules or layers **440** can include predictions or recommendations module **445.** Module **445** can be configured to use similar methods as module **343** of artificial intelligence (AI) layers **340** of **FIG. 3A****.** In some embodiments, the one or more predictions are useable to enable or optimize characterization, monitoring, control and/or modifications substantially in real-time to the one or more processes and/or the equipment in the manufacturing environment. Module **445** can be configured to use similar modules, methods, or workflows of AI layer **530** of **FIG. 1B****.**

Further illustrated in **FIG. 4****,** the data and machine learning modules or layers **440** can include publishing module **446.** Module **446** can be configured to use similar modules, methods, or workflows as **343** of artificial intelligence (AI) layers **340** of **FIG. 3A** or performance management **550** of **FIG. 1B****.** In some embodiments, the system further comprises a publishing module that is configured to publish the one or more predictions for integration into process control workflows associated with the manufacturing environment.

Further illustrated in **FIG. 4****,** the data and machine learning modules or layers **440** can include data module **447.** Module **447** can comprise operations configured to get response data or get target data. Response data or target data may be received or fetched from data hubs of module **410.** Data may be received or fetched from data hubs via APIs configured to receive data or fetch data. In some cases, data may be received or fetched directly from data hubs via specifically provisioned datastores configured for transmitting data. In some cases, data may be received or fetched directly from processing equipment, processing sensors, or metrology equipment. In some cases, data may be received or fetched directly from SPC equipment, APC equipment, or FDC equipment. Module **447** can be configured to use similar modules, methods, or workflows as **310** or **320** of **FIG. 3A** or application layer **510** of **FIG. 1B****.**

Further illustrated in **FIG. 4****,** the data and machine learning modules or layers **440** can include FDC trace module **448.** Module **448** can comprise operations configured to get FDC trace data. Fault detection and classification trace data may be received or fetched from legacy systems of module **410.** Fault detection and classification trace data may be received or fetched from module **447.** Module **448** may transmit data to module **445** for generating predictions or recommendations. Data may be transmitted, received, or fetched via APIs configured to transmit data, receive data, or fetch data. Module **448** can be configured to use similar modules, methods, or workflows as **310** or **320** of **FIG. 3A** or application layer **510** of **FIG. 1B****.**

Further illustrated in **FIG. 4****,** the data and machine learning modules or layers **440** can include task module **449.** Module **449** can comprise operations configured to schedule tasks or monitor tasks performed by module **430.** Module **449** can be configured to use similar modules, methods, workflows as **330** of **FIG. 3A** or VM engine **520** and AI layer **530** of **FIG. 1B****.**

Further illustrated in **FIG. 4****,** workflow **400** can include a front-end management module **420** configured for users to interface with workflow **400,** e.g., core services of workflow **400,** for developing models that generate predictions or recommendations for optimizing process control or monitoring in manufacturing environments. Core services can include services associated with VM. Users can include executives, customers, process engineers, technicians, vendors, and the like associated with manufacturing processes in manufacturing environments. Module **420** can comprise front-end application services, back-end application services, user management services, alerting services, log monitoring services, or user management database services. Services described herein may be configured using APIs configured to perform services. Front-end management module **420** can be configured to use similar modules, methods, or workflows as **350** of **FIG. 3A** or application layer **510** or performance management **550** of **FIG. 1B****.**

Front-end application services of module **420** can include user applications configured to allow users to interact with workflow **400.** For example, users can connect additional processes; connect additional equipment or units; collect data from processes, equipment, or units; generate datasets from data; generate base ML models, generate custom ML models, view performance of ML models, and the like. Module **420** may be configured using APIs configured to perform services. A nonlimiting example of an API that can be configured to perform front-end application services includes React^{®}. Front-end application services can be configured to use similar modules, methods, or workflows as **350** of **FIG. 3A** or application layer **510** or performance management **550** of **FIG. 1B****.**

Back-end application services of module **420** can be configured to access (e.g., a gateway) core services of workflow **400.** Back-end application services may be configured using APIs configured to perform services. Back-end application services can be configured to use similar modules, methods, workflows as **350** of **FIG. 3A** or application layer **510** or performance management **550** of **FIG. 1B****.**

User management services of module **420** can be configured to allow users to access core services via back-end application services. User management services may be configured using APIs configured to perform services. User management services can be configured to use similar modules, methods, or workflows as **350** of **FIG. 3A** or application layer **510** or performance management **550** of **FIG. 1B****.**

Alerting services of module **420** can be configured to provide user alerts for alerts associated with workflow **400.** Alerting services may be configured using APIs configured to perform services. A nonlimiting example of an API that can be configured to perform alerting services includes Elastic^{®} Kibana. Alerting services can be configured to use similar modules, methods, or workflows as module **350** of **FIG. 3A****.**

Log monitoring services of module **420** can be configured for user visualization of logs associated with workflow **400.** Logs can be provided to users via dashboards or graphical user interfaces (GUI). Logs can comprise statistics associated with workflow **400.** Statistics can include statistics related to performance of models. Log monitoring services may be configured using APIs configured to perform services. Log monitoring services can be configured to use similar modules, methods, or workflows as **350** of **FIG. 3A** or performance management **550** of **FIG. 1B****.**

User management database services of module **420** can be configured to receive and store user interactions with workflow **400** in databases. User interactions may be recalled or received by users for subsequent user interactions with workflow **400.** User management database services may be configured using APIs configured to perform services. A nonlimiting example of databases that can be configured to perform user management database services includes Oracle^{®} database. User management database services can be configured to use similar modules, methods, or workflows as **350** of **FIG. 3A** or data and infrastructure layer **540** of **FIG. 1B****.**

As illustrated in **FIG. 4****,** workflow **400** can include an infrastructure module **430** configured to manage users or models for developing models that generate predictions or recommendations for optimizing process control or monitoring in manufacturing environments. Module **430** can comprise modules for distributed log storage databases, multi-cloud databases, object storage, deployment services, and the like. Distributed log storage databases can be configured to store logs or search logs. In some embodiments, the plurality of data stores comprise an object storage configured to store one or more model data files associated with the one or more machine learning models. A nonlimiting example of distributed log storage database includes Elastic^{®} Kibana. Multi-cloud databases can be configured to store data associated with VM. A nonlimiting example of multi-cloud databases includes MongoDB^{®}. Object storage can be configured to store files associated with models. Deployment services can be configured to schedule tasks or monitor tasks associated with deploying models. manages job queues for worker app services. A nonlimiting example of Deployment services includes RedisAI^{®}. Infrastructure module **430** can be configured to use similar modules, methods, or workflows as **330** of **FIG. 3A** or data and infrastructure layer **540** of **FIG. 1B****.**

In some embodiments, the one or more predictions are generated based on virtual metrology (VM). Manufacturing environments maybe associated with equipment configured to carry out processes. Processes can be associated with inputs and outputs configured in feedback control loops. Feedback control loops can generate different inputs to improve outputs. Inputs and outputs can include data associated with process variables or target properties. Process variables or target properties may be detected or measured using sensors or instruments. For example, process variables associated with semiconductor manufacturing processes, e.g., chemical vapor deposition, can include temperature, pressure, power, electrical current, gas quantities, and the like. Target variables associated with semiconductor manufacturing processes, e.g., chemical vapor deposition, can include wafer film thickness, wafer refractive index, critical dimensions, and the like. Inputs and outputs can include data associated with contemporary (e.g., current or real time) data or historical data. Contemporary data or historical data may be associated with sensor data, sensor specification data, process data, process specification data, measurement data, operation data, equipment data, equipment specification data, or FDC data.

Systems described herein (e.g., VM systems or IM systems) can use inputs and outputs associated with manufacturing environments to generate predictions or recommendations to optimize process control or monitoring of manufacturing processes in manufacturing environments. Processes may be associated with SPC process or APC processes. Advanced process control can comprise methods for monitoring processes, controlling processes, improving processes, or troubleshooting processes.

### Methods for aggregating data and models for virtual metrology

The present disclosure also provides improved systems and methods that can utilize collected sensor data for optimizing process control and monitoring in high-volume manufacturing. The collected sensor data may be provided from post-process measurements, such as thickness, mass, refractive index, and critical dimension. As discussed above, virtual metrology (VM) can be a technique that predicts the post-process measurements of wafers without physical metrology. In some cases, VM can provide 100% wafer measurements that can be utilized for advanced process control (APC) or statistical process control (SPC) to enhance yield in semiconductor manufacturing. Physical metrology cannot achieve such results because it can incur overhead costs of operating metrology equipment that limits throughput. Despite advantages of VM implementations, VM may not be widely deployed in actual manufacturing processes due, e.g., a lack of accuracy and scalability caused by inherent characteristics of semiconductor manufacturing data, such as drastic data drifts, data shifts, and data scarcity in semiconductor manufacturing data.

In semiconductor manufacturing, many different factors can cause data drifts data shifts. For example, changes in equipment parameters-including process recipe variables like temperature, pressure, and process duration-as well as periodic maintenance can lead to data drifts and shifts. Data shifts typically occur due to preventive maintenance or recipe adjustments, while data drifts result from gradual changes in equipment status during continuous operations. The status of equipment can change drastically after a preventive maintenance event, which can lead to data shift. Traditional regression methods like gradient boosting and neural networks often underperform in VM applications for semiconductor manufacturing. These methods typically assume static environments, where the relationship between process parameters and target measures remains constant over time. However, semiconductor manufacturing environments are dynamic, with frequent changes in data characteristics between model training and deployment. To address the technical challenges of data drifts and data shifts, an adaptive online model was previously disclosed that can capture the change in the relationship between input and output. In some cases, inputs can include equipment sensor data and process recipe parameters; outputs can include post-process measurements such as thickness and mass. *See,* e.g., Zabrocki et al., "Adaptive Online Time-Series Prediction for Virtual Metrology in Semiconductor Manufacturing." 2023 34th Annual SEMI Advanced Semiconductor Manufacturing Conference (ASMC). IEEE, 2023, which is incorporated herein by reference in its entirety. With this method, the adaptive online model achieved the level of VM prediction accuracy that is applicable in real high-volume manufacturing facilities. A manufacturing facility, e.g., SK Hynix^{®}, deployed the adaptive online model for 1,005 data streams of major outcome variables of chemical vapor deposition (CVD), physical vapor deposition (PVD), and ETCH processes and achieved statistically significant improvements in process control and monitoring. Specifically, using the resulting virtual measurements for APC resulted in process variability reduction by at least about 30% on average thereby improving yield. Such technical improvements demonstrate that addressing the challenges specific to semiconductor manufacturing can be crucial for a highly accurate VM model. This demonstration is described further below in the Examples section.

The present disclosure further improves upon the predictive performance of the adaptive online model by focusing on another technical challenge in semiconductor manufacturing: making VM predictions with scarce or sparse data. Data scarcity or sparsity presents a significant technical challenge in VM, often resulting from low measurement sampling rates and heterogeneous datasets across various manufacturing processes and recipes. In this context, heterogeneity refers to situations where the true relationship between input variables and output measures established for one environment (e.g., from a specific equipment with a particular recipe) may not hold for other cases. In some cases, chip manufacturers may keep sampling rates low due to, e.g., the overhead of physical metrology measurements and the vastly different characteristics of datasets across processes, recipes, or equipment. Even when equipment types and recipes are identical or similar, the status of individual chambers can vary significantly. Factors influencing chamber status include uptime, maintenance history, component wear, process residue accumulation, and environmental conditions such as temperature and humidity fluctuations. Therefore, simple data aggregation may not be effective in VM because of such heterogeneity (or variety), which can exacerbate the technical problem of scarce or sparse data.

To address data scarcity or sparsity, provided herein is an improved VM model or algorithm called the aggregated adaptive online model (AggAOM), which can be utilized for the hierarchical structure of semiconductor manufacturing equipment. Equipment tools within the same hierarchy often exhibit high-level commonalities due to shared underlying physics and operational events, such as maintenance schedules and part replacements. The commonalities may be computed by generating a correlation matrix of each tool and comparing the similarity between matrices. These commonalities may include control system architectures, sensor types, process flows, and quality control procedures, contributing to the potential for knowledge transfer and unified modeling approaches across similar equipment. Such a hierarchical structure, when utilized or considered by the AggAOM, can capture both the commonalities and specificities of equipment tools. Such a model can successfully address the technical challenges of data scarcity or sparsity and the instability problem resulting from data drifts or data shifts. By solving these technical problems, the AggAOM can significantly improve the predictive performance of VM on high-volume manufacturing datasets in the real world.

### Adaptive online models

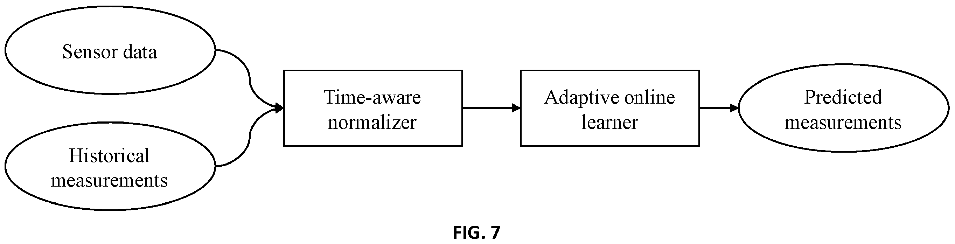

Previously, Zabrocki introduced an adaptive online model (AOM) that can be tailored to swiftly adapt to significant data drifts and data shifts in semiconductor data by updating the model as new measurements are observed. *See* Zabrocki et al herein. The essence of the AOM can be illustrated in **FIG. 7****.** In some cases, the AOM can be viewed as a dynamic system designed for environments where data may be continuously shifting and evolving because the AOM assimilates new information seamlessly. For example, the AOM can be configured to focus on incorporating the temporal dynamics of data, which can position the AOM as a pivotal tool for real-time data analysis in VM. The AOM can achieve a relatively high level of prediction accuracy. However, using the AOM alone may inadvertently overlook chamber-wise high-level commonalities on underlying physics and operational events during manufacturing processes because it may be trained independently by chamber.

Briefly, the AOM may include receiving sensor data and historical measurements as inputs to the AOM. The AOM may include a time-aware normalizer that normalizes the data based on its time stamp. Then, an adaptive online learner which can learn and predict measurements based on the normalized data. The predicted measurements may be the result of the VM that can be used to supplement the sampled data.

### Aggregated models

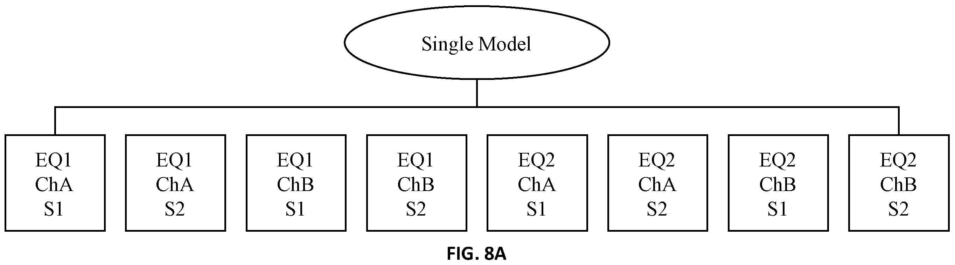

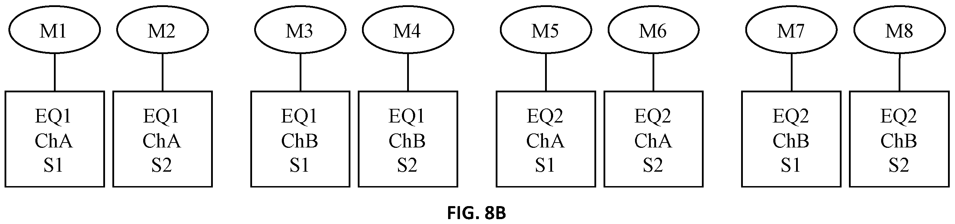

Systems and methods herein can improve upon both the AOM and other VM approaches. For example, compared to the AOM, other VM models may focus on developing a unified single model that predicts across different equipment, chambers, and stations as shown in **FIG. 8A****.** *See,* e.g., Chan et al., "Just-in-time modeling with variable shrinkage based on Gaussian processes for semiconductor manufacturing." IEEE Transactions on Semiconductor Manufacturing 31.3 (2018): 335-342; Chen et al., "Virtual metrology of semiconductor PVD process based on combination of tree-based ensemble model." Isa Transactions 103 (2020): 192-202; Lynn et al., "Global and local virtual metrology models for a plasma etch process." IEEE Transactions on Semiconductor Manufacturing 25.1 (2011): 94-103, each of which is incorporated herein by reference in its entirety. Compared to the unified single model, the AOM can employ individual models (M1, M2, M3, and so on) to capture different predictive behaviors of each station (S1, S2, S3, and so on) for equipment (EQ1, EQ2, EQ3, and so on) and chambers (ChA, ChB, ChC, and so on), as shown in **FIG. 8B****.** As a result, the station-wise models can generate better predictions even with data drifts and data shifts that can appear in separate chambers and stations.

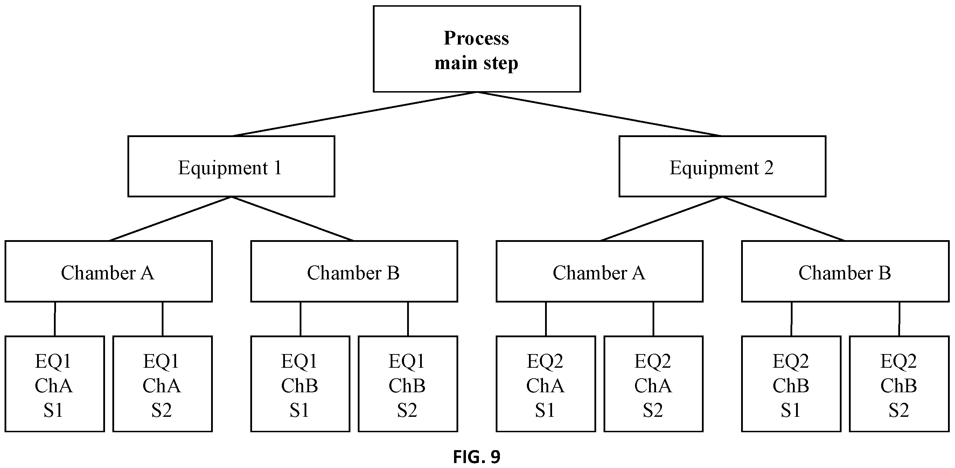

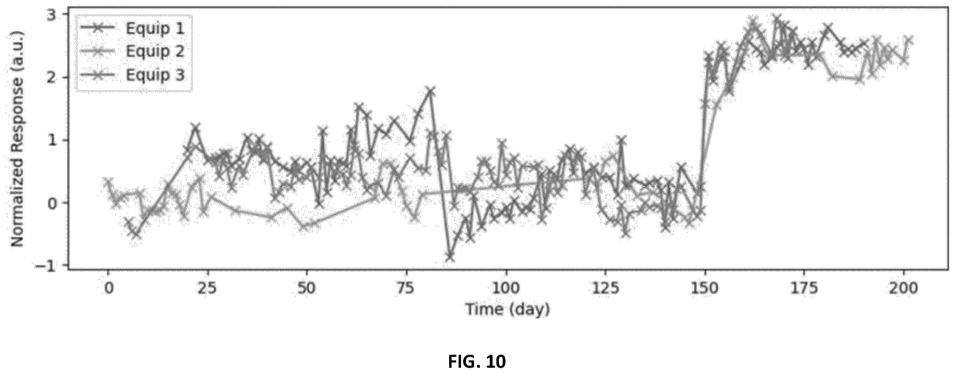

Compared to the AOM and other VM approaches, the AggAOM herein can uniquely incorporate hierarchical structures within a boosting algorithm, whereby a learner or regressor is sequentially trained to correct the errors of their predecessors, ultimately creating a strong learner/regressor. Boosting algorithms can include, e.g., XGBoost, LightGBM, CatBoost, and the like. For example, consider a typical semiconductor manufacturing process where a key step may involve multiple pieces of equipment (e.g., equipment 1 and 2), each containing several chambers (e.g., chambers A and B), which in turn encompass two stations (e.g., stations S1 and S2). **FIG. 10** illustrates an example showcasing the standardized thickness of wafers processed by three equipment, whereby the x-axis is the process time. Although these three time-series data exhibit different behaviors, they share discernible patterns of fluctuations. Recognized herein, as illustrated in **FIG. 9****,** rather than building independent models in a process-wise or station-wise way, an aggregated model, e.g., the AggAOM, can be developed to capture the shared patterns across the multi-level hierarchy of equipment. This approach can allow harnessing the collective insights from the equipment, chambers, and stations. Consequently, the AggAOM can capture important patterns at the chamber level, enhancing predictive power for stations of interest within the same chamber. This approach is expected to yield significant improvements in predictive accuracy. In contrast, station-wise individual models cannot achieve this hierarchical information.

### Aggregated adaptive online models (AggAOM)

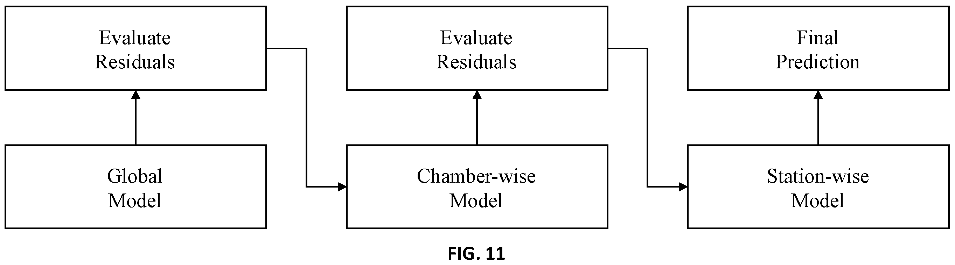

The AggAOM herein is an ensemble model that can include several weak models (or learners). **FIG. 11** illustrates a high-level architecture or flow of one potential instantiation of the AggAOM. To capture the hierarchy structure inherent in equipment, the AggAOM can include three levels based on the domain knowledge: "equipment level", "chamber level", "station level." The highest level "equipment level" assigns a model to each equipment to capture commonalties that happen across various chambers or stations that belong to this equipment. The output from the equipment level can be used to evaluate its residuals, e.g., discrepancies or differences between predictions and actual measurements. These residuals can serve as a training signal as they may provide granularity of interest at subsequent levels, given the removal of higher-level commonalities. The second level is a "chamber level," which can generate a more granular level of modeling that can focus on individual chambers. The residuals of the chamber level can be utilized to train the models at the subsequent level. The final level is a "station level," which can represent the most detailed layer of modeling by focusing on individual stations within chambers. The final predictions are made by processing (e.g., adding) the predictions from all levels to generate an ensemble model.

In semiconductor manufacturing processes, each wafer is processed through a hierarchical structure: a station (e.g., S1_ChA_EQ1) within a chamber (e.g., ChA_EQ1) within equipment (e.g., EQ1). The corresponding FDC sensor values are used to iteratively refine models at each level. First, they update the global model for EQ1. Then, the residuals from this global model update the chamber model for ChA_EQ1. Finally, the residuals from the chamber model update the station model for S1_ChA_EQ1. All wafers can be used in the same way to update the equipment, chamber, and station models. This hierarchical approach ensures that all global and local models are refined based on the equipment's structure. In some instances, the AggAOM can be applied to cases where only chamber and station levels may be available.

The high-level architecture or flow can provide a systematic approach to improving prediction accuracy by leveraging both global and local data patterns and by iterative refinement. In some cases, residuals can be used as a ground-truth (or target variables) of training data, which can be determined at each level or stage using a trained model of the previous level or stage.

Which data to predict or output using methods herein can be determined based at least on scarcity. Scarcity can be quantified as the number of training samples. For example, if the number of training samples is below a threshold (e.g., number of samples per area of interest, number of samples per process time, etc.). The number of training samples may be determined by two factors: one is the sampling rate and the other is the data collection duration. An ablation study may be performed to compare scarce vs non-scarce datasets to determine and/or confirm whether a data set is scarce. For example, an experiment can include selecting one dataset and then randomly drop target values to reduce the number of training samples.

### Machine learning methods for optimizing process control or monitoring

Many machine learning (ML) methods implemented as algorithms are suitable as approaches to perform the methods described herein. Such methods include but are not limited to supervised learning approaches, unsupervised learning approaches, semi-supervised approaches, or any combination thereof.

Machine learning algorithms may include without limitation neural networks (e.g., artificial neural networks (ANN), multi-layer perceptrons (MLP), long short-term memory (LSTM)), support vector machines, k-nearest neighbors, Gaussian mixture model, Gaussian process, naive Bayes, decision trees, random forest, or gradient boosting trees. Linear machine learning algorithms may include without limitation linear regression with or without regularizer, logistic regression, naive Bayes classifier, perceptron, or support vector machines (SVMs). Other machine learning algorithms for use with methods according to the present disclosure may include without limitation quadratic classifiers, k-nearest neighbor, boosting, decision trees, random forests, neural networks, pattern recognition, Bayesian networks, or Hidden Markov models. Other machine learning algorithms, including improvements or combinations of any of these, commonly used for machine learning, can also be suitable for use with the methods described herein. Any use of a machine learning algorithm in a workflow can also be suitable for use with the methods described herein. The workflow can include, for example, cross-validation, nested-cross-validation, feature selection, row compression, data transformation, binning, normalization, standardization, and algorithm selection.

A machine learning algorithm can generally be trained by the following methodology to build a machine learning model. For example, generated models may determine or predict process variables or target properties to optimize process control or monitoring. Input data can include, for example, process variables data, target properties data, FDC data, measurement data, sensor data, features, and the like described elsewhere herein. Output data can include, for example, determinations or predictions of process variables, target properties, root causes of anomalies and the like described elsewhere herein.
1. Gather a dataset for "training" and "testing" the machine learning model. The dataset can include many features, for example, features associated with sensor data, equipment, processes, anomalies, and the like. The training dataset is used to "train" a machine learning model. The testing dataset is used to evaluate the trained machine learning model.
2. Determine "features" for the machine learning algorithm to use for training and testing. The accuracy of the machine learning algorithm may depend on how the features are represented. For example, feature values may be transformed using one-hot encoding, binning, standardization, or normalization. Also, not all features in the dataset may be used to train and test the machine learning algorithm. Selection of features may depend on, for example, available computing resources and time or importance of features discovered during iterative testing and training. For example, it may be discovered that features associated with sensor data or equipment specifications are predictive for process variables, target properties, or root causes of anomalies.
3. Choose an appropriate machine learning algorithm. For example, a machine learning algorithm described elsewhere herein may be chosen. The chosen machine learning algorithm may depend on, for example, available computing resources and time or whether the prediction is continuous or categorical in nature. The machine learning algorithm is used to build the machine learning model.
4. Build the machine learning model. The machine learning algorithm is run on the gathered training dataset. Parameters of the machine learning algorithm may be adjusted by optimizing performance on the training dataset or via cross-validation datasets. After parameter adjustment and learning, the performance of the machine learning algorithm may be validated on a dataset of naive samples that are separate from the training dataset and testing dataset. The built machine learning model can involve feature coefficients, importance measures, or weightings assigned to individual features.

Once the machine learning model is determined as described above ("trained"), it can be used to generate predictions or recommendations for process variables or target properties for optimization of process control or monitoring of manufacturing processes in manufacturing environments.

### Examples

While various examples of the present disclosure have been shown and described herein, such examples are provided by way of example only. Numerous variations, changes, or substitutions may occur without departing from the present disclosure. It should be understood that various alternatives to the examples described herein may be employed.

### Example 1: Statistically significant performance improvement of the AggAOM Benchmarks

Two benchmark datasets were used and provided by SK Hynix^{®}. The datasets were collected from chemical vapor deposition (CVD) processes in a real manufacturing environment (e.g., a semiconductor fab environment) and used to evaluate the performance of the baseline model and different models, e.g., linear model, partial least squares (PLS) model, XGBoost (XGB) model, AOM, and the AggAOM herein. Datasets contained thickness measurements along with fault detection and classification (FDC) summary statistics collected from various sensors affixed to equipment, chambers, or stations. Although thickness measurements are provided as an example, methods herein can use datasets comprising delta mass, refractive index, critical dimension, and the like. The first benchmark dataset (CVD1) comprised 10,789 measured wafers from 15 equipment containing a total of 86 stations (e.g., 43 associated chambers). The second benchmark dataset (CVD2) included 12,685 measured wafers from 15 equipment containing a total of 84 stations. Both datasets were collected over a span of time, e.g., nine months. In some cases, the span of time can be at least 1 day, 1 month, 1 year, or more. In some cases, the span of time can be at most 1 year, 1 month, 1 day, or less.

### Demonstration details

Each benchmark dataset was sorted with process time (see, e.g., **FIG. 10**). Although sorting by process time is provided as an example, methods herein can sort using other pre-processing steps, e.g., scaling, imputation, outlier removal, and the like. The initial 70% of wafers were utilized as the training dataset, while the remaining wafers were designated as the test dataset. Hyperparameter optimization (HPO) was conducted for each model. Generally, HPO can be agnostic to different machine learning models, including the AggAOM herein, and can be configured as an optimization process for finding the best set of hyperparameters for a machine learning model to maximize or optimize its performance on a validation dataset. For HPO, the training dataset was additionally divided into the initial 75% for training and the rest for validation. The validation dataset was used to assess the performance of a model with a specific hyperparameter set. After HPO, the entire training dataset, including the validation dataset, was used to train a model with the best or optimal hyper-parameter set and evaluated on the test dataset.

### Results

The aggregated adaptive online model (AggAOM) herein was compared with the adaptive online model (AOM) and three baseline models: linear model, PLS model, and XGB model. *See,* e.g., Wold et al., "PLS-regression: a basic tool of chemometrics." Chemometrics and intelligent laboratory systems 58.2 (2001): 109-130 for PLS model; Chen et al., "Xgboost: A scalable tree boosting system." Proceedings of the 22nd ACM SIGKDD International Conference on Knowledge Discovery and Data Mining. 2016 for XGB model, each of which is incorporated herein by reference in its entirety. As illustrated in **FIGs. 12A-12D****,** the AOM and the AggAOM demonstrated statistically significant improved performance over the baseline models (e.g., PLS model and XGB model) in terms of both r-squared (R2, **FIG. 12A** and **FIG. 12C****)** and root mean squared error (RMSE, **FIG. 12B** and **FIG. 12D****).** The performance of the PLS model and the XGB model were barely better than that of the simple linear model. This suggests that addressing data drifts and data shifts can be useful for VM. The AggAOM achieved a statistically significant performance improvement on both datasets compared to AOM. Specifically, as illustrated in **FIG. 12B** and **FIG. 12D****,** the AggAOM achieved an RMSE reduction of 30.3% in CVD1 and 35.7% in CVD2 compared to the simple linear model and improved upon the AOM by 7.3% in CVD1 and 6.1% in CVD2. This demonstrates the effectiveness of capturing shared patterns across the multi-level hierarchy of the equipment in improving VM prediction performance.

### Conclusions

The AggAOM herein can significantly improve the accuracy of VM predictions by resolving the technical problems of data drifts, data shifts, and data scarcity or sparsity of measurements. The AggAOM can incorporate or use the hierarchical structure of multiple tools to leverage physical commonalities across different equipment, chambers, or stations within the same hierarchy while accommodating their unique variations. The AggAOM has been demonstrated or deployed into high-volume manufacturing facilities such as the mega fabs of SK - 37 -ynix^{®} and has been extensively evaluated with a vast amount of data from high-volume manufacturing. The results on two CVD datasets from SK - 37 -ynix^{®} demonstrate the technical improvement of the AggAOM over other VM models. The statistically significant improvement in performance demonstrates the effectiveness of the AggAOM in high-volume semiconductor manufacturing environments and also demonstrates the usefulness and importance of building machine-learning models that can address specific technical challenges of VM associated with manufacturing data that other models cannot solve. By utilizing the AggAOM in semiconductor manufacturing facilities such as SK hynix^{®} and by running the AggAOM with daily advanced process control (APC) run-to-run (R2R) operations for over a year, systems and methods herein demonstrated significantly reduced process variability in the applied processes thereby improving yield, throughput, and cost-effectiveness.

### Computing systems

In an aspect, disclosed herein is a computer program product for optimizing process control or monitoring of manufacturing environments, the computer program product comprising at least one non-transitory computer-readable medium having computer-readable program code portions embodied therein, the computer-readable program code portions comprising: an executable portion configured to interface with a client application layer associated with a manufacturing environment, wherein the executable portion comprises (1) an executable portion configured to receive data from at least one source within the client application layer, (2) an executable portion configured to enable a user to create one or more customized datasets from the data, (3) an executable portion configured to enable the user to build, train and/or update one or more machine learning models using at least in part the one or more customized datasets, and (4) an executable portion configured to use the one or more machine learning models for generating one or more predictions as one or more processes are being performed and/or equipment is being operated in the manufacturing environment.

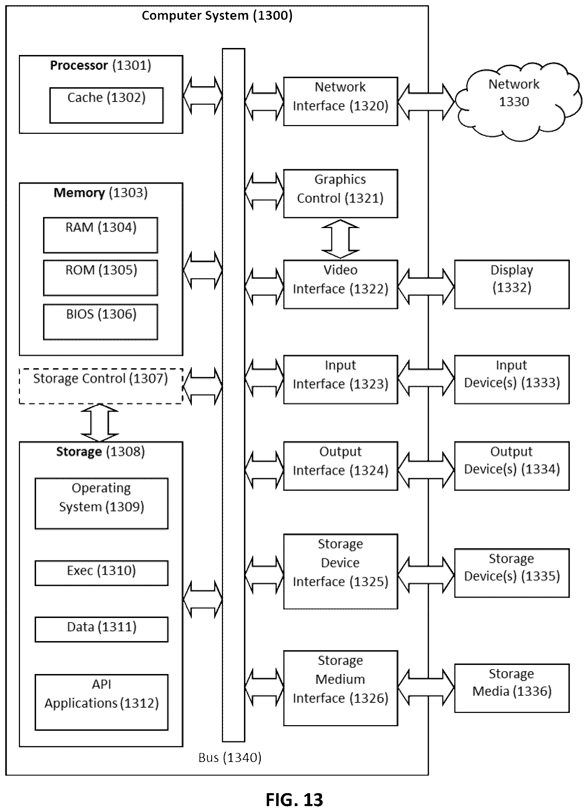

Referring to **FIG. 13****,** a block diagram is shown depicting an exemplary machine that includes a computer system 1300 (e.g., a processing or computing system) within which a set of instructions can execute for causing a device to perform or execute any one or more of the aspects and/or methodologies for static code scheduling of the present disclosure. The components in **FIG. 13** are examples only and do not limit the scope of use or functionality of any hardware, software, embedded logic component, or a combination of two or more such components implementing particular embodiments.

Computer system 1300 may include one or more processors 1301, a memory 1303, and a storage 1308 that communicate with each other, and with other components, via a bus 1340. The bus 1340 may also link a display 1332, one or more input devices 1333 (which may, for example, include a keypad, a keyboard, a mouse, a stylus, etc.), one or more output devices 1334, one or more storage devices 1335, and various tangible storage media 1336. All of these elements may interface directly or via one or more interfaces or adaptors to the bus 1340. For instance, the various tangible storage media 1336 can interface with the bus 1340 via storage medium interface 1326. Computer system 1300 may have any suitable physical form, including but not limited to one or more integrated circuits (ICs), printed circuit boards (PCBs), mobile handheld devices (such as mobile telephones or PDAs), laptop or notebook computers, distributed computer systems, computing grids, or servers.

Computer system 1300 includes one or more processor(s) 1301 (e.g., central processing units (CPUs) or general purpose graphics processing units (GPGPUs)) that carry out functions. Processor(s) 1301 optionally contains a cache memory unit 1302 for temporary local storage of instructions, data, or computer addresses. Processor(s) 1301 are configured to assist in execution of computer readable instructions. Computer system 1300 may provide functionality for the components depicted in **FIG. 13** as a result of the processor(s) 1301 executing non-transitory, processor-executable instructions embodied in one or more tangible computer-readable storage media, such as memory 1303, storage 1308, storage devices 1335, and/or storage medium 1336. The computer-readable media may store software that implements particular embodiments, and processor(s) 1301 may execute the software. Memory 1303 may read the software from one or more other computer-readable media (such as mass storage device(s) 1335, 1336) or from one or more other sources through a suitable interface, such as network interface 1320. The software may cause processor(s) 1301 to carry out one or more processes or one or more steps of one or more processes described or illustrated herein. Carrying out such processes or steps may include defining data structures stored in memory 1303 and modifying the data structures as directed by the software.

The memory 1303 may include various components (e.g., machine readable media) including, but not limited to, a random access memory component (e.g., RAM 1304) (e.g., static RAM (SRAM), dynamic RAM (DRAM), ferroelectric random access memory (FRAM), phasechange random access memory (PRAM), etc.), a read-only memory component (e.g., ROM 1305), and any combinations thereof. ROM 1305 may act to communicate data and instructions unidirectionally to processor(s) 1301, and RAM 1304 may act to communicate data and instructions bidirectionally with processor(s) 1301. ROM 1305 and RAM 1304 may include any suitable tangible computer-readable media described below. In one example, a basic input/output system 1306 (BIOS), including basic routines that help to transfer information between elements within computer system 1300, such as during start-up, may be stored in the memory 1303.

Fixed storage 1308 is connected bidirectionally to processor(s) 1301, optionally through storage control unit 1307. Fixed storage 1308 provides additional data storage capacity and may also include any suitable tangible computer-readable media described herein. Storage 1308 may be used to store operating system 1309, executable(s) 1310, data 1311, applications 1312 (application programs), and the like. Storage 1308 can also include an optical disk drive, a solidstate memory device (e.g., flash-based systems), or a combination of any of the above. Information in storage 1308 may, in appropriate cases, be incorporated as virtual memory in memory 1303.

In one example, storage device(s) 1335 may be removably interfaced with computer system 1300 (e.g., via an external port connector (not shown)) via a storage device interface 1325. Particularly, storage device(s) 1335 and an associated machine-readable medium may provide nonvolatile and/or volatile storage of machine-readable instructions, data structures, program modules, and/or other data for the computer system 1300. In one example, software may reside, completely or partially, within a machine-readable medium on storage device(s) 1335. In another example, software may reside, completely or partially, within processor(s) 1301.

Bus 1340 connects a wide variety of subsystems. Herein, reference to a bus may encompass one or more digital signal lines serving a common function, where appropriate. Bus 1340 may be any of several types of bus structures including, but not limited to, a memory bus, a memory controller, a peripheral bus, a local bus, and any combinations thereof, using any of a variety of bus architectures. As an example and not by way of limitation, such architectures include an Industry Standard Architecture (ISA) bus, an Enhanced ISA (EISA) bus, a Micro Channel Architecture (MCA) bus, a Video Electronics Standards Association local bus (VLB), a Peripheral Component Interconnect (PCI) bus, a PCI-Express (PCI-X) bus, an Accelerated Graphics Port (AGP) bus, HyperTransport (HTX) bus, serial advanced technology attachment (SATA) bus, and any combinations thereof.

Computer system 1300 may also include an input device 1333. In one example, a user of computer system 1300 may enter commands and/or other information into computer system 1300 via input device(s) 1333. Examples of an input device(s) 1333 include, but are not limited to, an alpha-numeric input device (e.g., a keyboard), a pointing device (e.g., a mouse or touchpad), a touchpad, a touch screen, a multi-touch screen, a joystick, a stylus, a gamepad, an audio input device (e.g., a microphone, a voice response system, etc.), an optical scanner, a video or still image capture device (e.g., a camera), and any combinations thereof. In some embodiments, the input device is a Kinect^{®}, Leap Motion^{®}, or the like. Input device(s) 1333 may be interfaced to bus 1340 via any of a variety of input interfaces 1323 (e.g., input interface 1323) including, but not limited to, serial, parallel, game port, USB, FIREWIRE, THUNDERBOLT, or any combination of the above.

In particular embodiments, when computer system 1300 is connected to network 1330, computer system 1300 may communicate with other devices, specifically mobile devices and enterprise systems, distributed computing systems, cloud storage systems, cloud computing systems, and the like, connected to network 1330. Communications to and from computer system 1300 may be sent through network interface 1320. For example, network interface 1320 may receive incoming communications (such as requests or responses from other devices) in the form of one or more packets (such as Internet Protocol (IP) packets) from network 1330, and computer system 1300 may store the incoming communications in memory 1303 for processing. Computer system 1300 may similarly store outgoing communications (such as requests or responses to other devices) in the form of one or more packets in memory 1303 and communicated to network 1330 from network interface 1320. Processor(s) 1301 may access these communication packets stored in memory 1303 for processing.

Examples of the network interface 1320 include, but are not limited to, a network interface card, a modem, and any combination thereof. Examples of a network 1330 or network segment 1330 include, but are not limited to, a distributed computing system, a cloud computing system, a wide area network (WAN) (e.g., the Internet, an enterprise network), a local area network (LAN) (e.g., a network associated with an office, a building, a campus or other relatively small geographic space), a telephone network, a direct connection between two computing devices, a peer-to-peer network, and any combinations thereof. A network, such as network 1330, may employ a wired and/or a wireless mode of communication. In general, any network topology may be used.

Information and data can be displayed through a display 1332. Examples of a display 1332 include, but are not limited to, a cathode ray tube (CRT), a liquid crystal display (LCD), a thin film transistor liquid crystal display (TFT-LCD), an organic liquid crystal display (OLED) such as a passive-matrix OLED (PMOLED) or active-matrix OLED (AMOLED) display, a plasma display, and any combinations thereof. The display 1332 can interface to the processor(s) 1301, memory 1303, and fixed storage 1308, as well as other devices, such as input device(s) 1333, via the bus 1340. The display 1332 is linked to the bus 1340 via a video interface 1322, and transport of data between the display 1332 and the bus 1340 can be controlled via the graphics control 1321. In some embodiments, the display is a video projector. In some embodiments, the display is a headmounted display (HMD) such as a VR headset. In further embodiments, suitable VR headsets include, by way of non-limiting examples, HTC Vive^{®}, Oculus Rift^{®}, Samsung Gear VR^{®}, Microsoft HoloLens^{®}, Razer OSVR^{®}, FOVE VR^{®}, Zeiss VR One^{®}, Avegant Glyph^{®}, Freefly VR^{®} headset, and the like. In still further embodiments, the display is a combination of devices such as those disclosed herein.

In addition to a display 1332, computer system 1300 may include one or more other peripheral output devices 1334 including, but not limited to, an audio speaker, a printer, a storage device, and any combinations thereof. Such peripheral output devices may be connected to the bus 1340 via an output interface 1324. Examples of an output interface 1324 include, but are not limited to, a serial port, a parallel connection, a USB port, a FIREWIRE port, a THUNDERBOLT port, and any combinations thereof.

In addition or as an alternative, computer system 1300 may provide functionality as a result of logic hardwired or otherwise embodied in a circuit, which may operate in place of or together with software to execute one or more processes or one or more steps of one or more processes described or illustrated herein. Reference to software in this present disclosure may encompass logic, and reference to logic may encompass software. Moreover, reference to a computer-readable medium may encompass a circuit (such as an IC) storing software for execution, a circuit embodying logic for execution, or both, where appropriate. The present disclosure encompasses any suitable combination of hardware, software, or both.

Various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by one or more processor(s), or in a combination of the two. A software module may reside in RAM memory, flash memory, ROM memory, EPROM memory, EEPROM memory, registers, hard disk, a removable disk, a CD-ROM, or any other form of storage medium. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In accordance with the description herein, suitable computing devices include, by way of non-limiting examples, server computers, desktop computers, laptop computers, notebook computers, sub-notebook computers, netbook computers, netpad computers, set-top computers, media streaming devices, handheld computers, Internet appliances, mobile smartphones, tablet computers, personal digital assistants, video game consoles, and vehicles. Select televisions, video players, and digital music players with optional computer network connectivity are suitable for use in the system described herein. Suitable tablet computers, in various embodiments, include those with booklet, slate, and convertible configurations.

In some embodiments, the computing device includes an operating system configured to perform executable instructions. The operating system is, for example, software, including programs and data, which manages the device's hardware and provides services for execution of applications. Suitable server operating systems include, by way of non-limiting examples, FreeBSD^{®}, OpenBSD^{®}, NetBSD^{®}, Linux^{®}, Apple^{®} Mac OS X Server^{®}, Oracle Solaris^{®}, Windows Server^{®}, and Novell NetWare^{®}. Suitable personal computer operating systems include, by way of non-limiting examples, Microsoft Windows^{®}, Apple Mac^{®} OS X, UNIX^{®}, and UNIX-like operating systems such as GNU/Linux^{®}. In some embodiments, the operating system is provided by cloud computing. Suitable mobile smartphone operating systems include, by way of nonlimiting examples, Nokia Symbian^{®} OS, Apple^{®} iOS, Research In Motion BlackBerry^{®} OS, Google^{®} Android^{®}, Microsoft^{®} Windows Phone^{®} OS, Microsoft^{®} Windows Mobile OS, Linux^{®}, and Palm^{®} WebOS. Suitable media streaming device operating systems include, by way of nonlimiting examples, Apple TV^{®}, Roku^{®}, Boxee^{®}, Google TV^{®}, Google Chromecast^{®}, Amazon Fire^{®}, and Samsung^{®} HomeSync^{®}. Suitable video game console operating systems include, by way of non-limiting examples, Sony^{®} PS3^{®}, Sony^{®} PS4^{®}, Microsoft^{®} Xbox 360^{®}, Microsoft Xbox One^{®}, Nintendo Wii^{®}, Nintendo Wii U^{®}, and Ouya^{®}. Suitable virtual reality headset systems include, by way of non-limiting example, Meta Oculus^{®}.

### Non-transitory computer readable storage mediums

In some embodiments, the platforms, systems, media, and methods disclosed herein include one or more non-transitory computer readable storage media encoded with a program including instructions executable by the operating system of an optionally networked computing device. In further embodiments, a computer readable storage medium is a tangible component of a computing device. In still further embodiments, a computer readable storage medium is optionally removable from a computing device. In some embodiments, a computer readable storage medium includes, by way of non-limiting examples, CD-ROMs, DVDs, flash memory devices, solid state memory, magnetic disk drives, magnetic tape drives, optical disk drives, distributed computing systems including cloud computing systems and services, and the like. In some cases, the program and instructions are permanently, substantially permanently, semi-permanently, or non-transitorily encoded on the media.

### Computer programs

In some embodiments, the platforms, systems, media, and methods disclosed herein include at least one computer program, or use of the same. A computer program includes a sequence of instructions, executable by one or more processor(s) of the computing device's CPU, written to perform a specified task. Computer readable instructions may be implemented as program modules, such as functions, objects, application programming interfaces (APIs), computing data structures, and the like, that perform particular tasks or implement particular abstract data types. In light of the present disclosure provided herein, a computer program may be written in various versions of various languages.

The functionality of the computer readable instructions may be combined or distributed as desired in various environments. In some embodiments, a computer program comprises one sequence of instructions. In some embodiments, a computer program comprises a plurality of sequences of instructions. In some embodiments, a computer program is provided from one location. In other embodiments, a computer program is provided from a plurality of locations. In various embodiments, a computer program includes one or more software modules. In various embodiments, a computer program includes, in part or in whole, one or more web applications, one or more mobile applications, one or more standalone applications, one or more web browser plug-ins, extensions, add-ins, or add-ons, or combinations thereof.

### Terms and Definitions

Unless otherwise defined, all technical terms used herein have the same meaning as commonly understood by one of ordinary skill in the art to which this present disclosure belongs.

As used herein, the singular forms "a," "an," and "the" include plural references unless the context clearly dictates otherwise. Any reference to "or" herein is intended to encompass "and/or" unless otherwise stated.

As used herein, the term "about" in some cases refers to an amount that is approximately the stated amount.

As used herein, the term "about" refers to an amount that is near the stated amount by 10%, 5%, or 1%, including increments therein.

As used herein, the term "about" in reference to a percentage refers to an amount that is greater or less the stated percentage by 10%, 5%, or 1%, including increments therein.

As used herein, the phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

While preferred embodiments of the present disclosure have been shown and described herein, such embodiments are provided by way of example only. It is not intended that the present disclosure be limited by the specific examples provided within the specification. While the present disclosure has been described with reference to the aforementioned specification, the descriptions and illustrations of the embodiments herein are not meant to be construed in a limiting sense. Numerous variations, changes, and substitutions may occur without departing from the present disclosure. Furthermore, it shall be understood that all aspects of the present disclosure are not limited to the specific depictions, configurations, or relative proportions set forth herein which depend upon a variety of conditions and variables. It should be understood that various alternatives to the embodiments of the present disclosure described herein may be employed in practicing the present disclosure. It is therefore contemplated that the present disclosure shall also cover any such alternatives, modifications, variations, or equivalents. It is intended that the following claims define the scope of the present disclosure and that systems, methods and structures within the scope of these claims and their equivalents be covered thereby.

### EMBODIMENTS

1. A system for optimizing process control or monitoring of manufacturing environments, the system comprising:
   data and machine learning layers, configured to interface with a client application layer associated with a manufacturing environment, wherein the data and machine learning layers comprise (1) a data collector configured to receive data from at least one source within the client application layer, (2) a dataset generator configured to enable a user to create one or more customized datasets from the data, (3) a model management module configured to enable the user to build, train and/or update one or more machine learning models using at least in part the one or more customized datasets, and (4) an inference module configured to use the one or more machine learning models for generating one or more predictions as one or more processes are being performed and/or equipment is being operated in the manufacturing environment; and
   a plurality of data stores configured to store at least the data, new data updates, the one or more customized datasets, and the one or more machine learning models.
2. The system of embodiment 1, wherein the one or more predictions are generated based on virtual metrology (VM).
3. The system of embodiment 1, wherein the one or more machine learning models comprise an aggregated adaptive online model (AggAOM).
4. The system of embodiment 3, wherein the AggAOM is configured to utilize commonalities in the equipment and associated chambers or stations, wherein the commonalities include one or more of control system architectures, sensor types, process flows, or quality control procedures.
5. The system of embodiment 4, wherein the AggAOM is configured to employ a hierarchical structure of the equipment and associated chambers or stations.
6. The system of embodiment 5, wherein the hierarchical structure includes at least two levels of hierarchy.
7. The system of embodiment 6, wherein the hierarchical structure includes (1) an equipment level that assigns a global model to each equipment, wherein the global model is configured to process commonalities for evaluating a first set of residuals that occur across various chambers or stations associated with each equipment, (2) a chamber level that generates a higher-resolution chamber model than the global model, wherein the chamber model is configured to process commonalities for evaluating a second set of residuals, and (3) a station level that includes a higher-resolution station-wise model than the chamber model, wherein the station-wise model is configure to process at least the first set and the second set of residuals for generating the one or more predictions.
8. The system of embodiment 1, wherein the plurality of data stores comprise a database configured to store the data received from the at least one source within the client application layer.
9. The system of embodiment 1, wherein the plurality of data stores comprise an object storage configured to store one or more model data files associated with the one or more machine learning models.
10. The system of embodiment 1, further comprising a publishing module that is configured to publish the one or more predictions for integration into process control workflows associated with the manufacturing environment.
11. The system of embodiment 1, wherein the one or more predictions are useable to enable or optimize characterization, monitoring, control and/or modifications substantially in real-time to the one or more processes and/or the equipment in the manufacturing environment.
12. The system of embodiment 1, further comprising a model performance evaluation module that is configured to generate one or more performance metrics for the one or more machine learning models.
13. The system of embodiment 12, wherein the one or more performance metrics are derived from at least sensitivity analysis or stress tests.
14. The system of embodiment 12, further comprising a front-end user management module comprising a graphical user interface (GUI) configured to display the one or more performance metrics on a dashboard.
15. The system of embodiment 1, wherein the data comprises equipment data, process data, metadata and/or measurement data.
16. The system of embodiment 1, wherein the data collector is configured to receive the data synchronously from at least two different sources.
17. The system of embodiment 1, wherein the data collector is configured to receive the data from the at least one source based at least in part on a predetermined schedule.
18. The system of embodiment 1, wherein the data collector is configured to receive the data from the at least one source, based at least in part on detection of one or more events occurring within the manufacturing environment.
19. The system of embodiment 18, wherein the one or more events are associated with a drift, an excursion, a shift, a deviation, or an anomaly in at least one process or a process equipment within the manufacturing environment.
20. The system of embodiment 1, wherein the data comprises a plurality of data types and datasets comprising of: (1) historical process data, (2) current process data, (3) historical measurement data of one or more metrics, (4) current measurement data of one or more metrics, (5) operation data, or (6) equipment specification metadata.
21. The system of embodiment 1, wherein the dataset generator is configured to automate selection of one or more features within the one or more customized datasets.
22. The system of embodiment 1, wherein the model management module is configured to train the one or more machine learning models, including hyperparameter optimization.
23. The system of embodiment 22, wherein the hyperparameter optimization is performed based on one or more performance metrics when the one or more performance metrics degrades below a predetermined threshold level.
24. The system of embodiment 1, wherein the manufacturing environment is associated with at least one of semiconductor manufacturing, LCD display manufacturing, solar panel manufacturing, electronics manufacturing, battery manufacturing, automotive manufacturing, or pharmaceutical manufacturing.
25. A computer program product for optimizing process control or monitoring of manufacturing environments, the computer program product comprising at least one non-transitory computer-readable medium having computer-readable program code portions embodied therein, the computer-readable program code portions comprising:
   an executable portion configured to interface with a client application layer associated with a manufacturing environment, wherein the executable portion comprises (1) an executable portion configured to receive data from at least one source within the client application layer, (2) an executable portion configured to enable a user to create one or more customized datasets from the data, (3) an executable portion configured to enable the user to build, train and/or update one or more machine learning models using at least in part the one or more customized datasets, and (4) an executable portion configured to use the one or more machine learning models for generating one or more predictions as one or more processes are being performed and/or equipment is being operated in the manufacturing environment.

## Claims

1. A system for optimizing process control or monitoring of manufacturing environments, the system comprising:
data and machine learning layers, configured to interface with a client application layer associated with a manufacturing environment,
wherein the data and machine learning layers comprise (1) a data collector configured to receive data from at least one source within the client application layer, (2) a dataset generator configured to enable a user to create one or more customized datasets from the data, (3) a model management module configured to enable the user to build, train and/or update one or more machine learning models using at least in part the one or more customized datasets, and (4) an inference module configured to use the one or more machine learning models for generating one or more predictions as one or more processes are being performed and/or equipment is being operated in the manufacturing environment; and
a plurality of data stores configured to store at least the data, new data updates, the one or more customized datasets, and the one or more machine learning models,
wherein the one or more predictions are generated based on virtual metrology (VM).

2. The system of claim 1, wherein the one or more machine learning models comprise an aggregated adaptive online model (AggAOM).

3. The system of claim 2, wherein the AggAOM is configured to utilize commonalities in the equipment and associated chambers or stations, wherein the commonalities include one or more of control system architectures, sensor types, process flows, or quality control procedures.

4. The system of claim 3, wherein the AggAOM is configured to employ a hierarchical structure of the equipment and associated chambers or stations, and optionally wherein the hierarchical structure includes at least two levels of hierarchy.

5. The system of claim 4, wherein the hierarchical structure includes (1) an equipment level that assigns a global model to each equipment, wherein the global model is configured to process commonalities for evaluating a first set of residuals that occur across various chambers or stations associated with each equipment, (2) a chamber level that generates a higher-resolution chamber model than the global model, wherein the chamber model is configured to process commonalities for evaluating a second set of residuals, and (3) a station level that includes a higher-resolution station-wise model than the chamber model, wherein the station-wise model is configure to process at least the first set and the second set of residuals for generating the one or more predictions.

6. The system of claim 1, wherein the plurality of data stores comprises at least one of (i) a database configured to store the data received from the at least one source within the client application layer or (ii) an object storage configured to store one or more model data files associated with the one or more machine learning models.

7. The system of claim 1, further comprising a publishing module that is configured to publish the one or more predictions for integration into process control workflows associated with the manufacturing environment.

8. The system of claim 1, wherein the one or more predictions are useable to enable or optimize characterization, monitoring, control and/or modifications substantially in real-time to the one or more processes and/or the equipment in the manufacturing environment.

9. The system of claim 1, further comprising a model performance evaluation module that is configured to generate one or more performance metrics for the one or more machine learning models, and optionally wherein the one or more performance metrics are derived from at least sensitivity analysis or stress tests.

10. The system of claim 9, further comprising a front-end user management module comprising a graphical user interface (GUI) configured to display the one or more performance metrics on a dashboard.

11. The system of claim 1, wherein the data collector is configured to (i) receive the data synchronously from at least two different sources or (ii) receive the data from the at least one source based at least in part on a predetermined schedule.

12. The system of claim 1, wherein the data collector is configured to receive the data from the at least one source, based at least in part on detection of one or more events occurring within the manufacturing environment, and optionally wherein the one or more events are associated with a drift, an excursion, a shift, a deviation, or an anomaly in at least one process or a process equipment within the manufacturing environment.

13. The system of claim 1, wherein the data comprises a plurality of data types and datasets comprising of: (1) historical process data, (2) current process data, (3) historical measurement data of one or more metrics, (4) current measurement data of one or more metrics, (5) operation data, or (6) equipment specification metadata.

14. The system of claim 1, wherein the model management module is configured to train the one or more machine learning models, including hyperparameter optimization, and optionally wherein the hyperparameter optimization is performed based on one or more performance metrics when the one or more performance metrics degrades below a predetermined threshold level.

15. The system of claim 1, wherein the manufacturing environment is associated with at least one of semiconductor manufacturing, LCD display manufacturing, solar panel manufacturing, electronics manufacturing, battery manufacturing, automotive manufacturing, or pharmaceutical manufacturing.
